# EUROPEAN PATENT SPECIFICATION

(11) **EP 4 571 133 B1**
(45) Date of publication and mention of the grant of the patent: **02.09.2026**
(21) Application number: 24217464.7
(22) Date of filing: 04.12.2024
(51) Int. Cl.: F16B 37/04, F16B 11/00, F16B 43/00

(54) **NUT RETAINER ASSEMBLIES FOR BLIND FASTENER SYSTEMS, BLIND FASTENER SYSTEMS AND METHODS FOR ASSEMBLING NUT RETAINER ASSEMBLIES ON SUBSTRATES**
MUTTERHALTEANORDNUNGEN FÜR BLINDBEFESTIGUNGSSYSTEME, BLINDBEFESTIGUNGSSYSTEME UND VERFAHREN ZUR MONTAGE VON MUTTERHALTEANORDNUNGEN AUF SUBSTRATEN
ENSEMBLES DE RETENUE D'ÉCROU POUR SYSTÈMES DE FIXATION AVEUGLE, SYSTÈMES DE FIXATION AVEUGLE ET PROCÉDÉS D'ASSEMBLAGE D'ENSEMBLES DE RETENUE D'ÉCROU SUR DES SUBSTRATS

(30) Priority: 15.12.2023 US 202318541465
(43) Date of publication of application: 18.06.2025
(73) Proprietor: The Boeing Company, Arlington, VA 22202 (US)
(72) Inventor: SPENCER, Scott M., Arlington, Virginia 22202 (US); ARTHUR, Shane E., Arlington, Virginia 22202 (US); WILKINSON, Marianne E., Arlington, Virginia 22202 (US); MORDEN, Sean D., Arlington, Virginia 22202 (US); AHN, Jonathan Y., Arlington, Virginia 22202 (US); ANDERSON, Joseph D., Arlington, Virginia 22202 (US); DOLBEAR, Caroline E., Arlington, Virginia 22202 (US); CHAN, Kwok Tung, Arlington, Virginia 22202 (US); STRAIT, Alexander K., Arlington, Virginia 22202 (US)
(74) Representative: Sandri, Sandro

(56) References cited:
- US-A1- 2007 297 869
- US-A1- 2021 071 703
- US-B2- 11 767 874

## Description

### FIELD

The present disclosure relates generally to a nut retainer assembly for a blind fastener system and, particularly, to a nut retainer assembly suitable for bonding to a substrate and used to retain a fastener nut for subsequent engagement by a fastener bolt. The retained fastener nut and the fastener bolt being used to join multiple substrates together. Various examples of the nut retainer assemblies and blind fastener systems are described. Various methods for assembling nut retainer assemblies on substrates are also described. Various configurations of the nut retainer assemblies provide a pre-installed fastener nut on a blind side of one substrate for one-sided installation of the fastener bolt from a working side of another substrate.

### BACKGROUND

Future airplane wing box architectures are getting smaller, which generates confined space and the need for a different fastening system that enables assembly from the outer mold line of the wing (e.g., skin/shear ties and skin/spar). The traditional nut plate styles are not applicable to the need for fuel tank and electromagnetic effect requirements. Current designs for nut retainers and one-sided fastener systems either are not able to take the required torque needed in high strength applications and or require the nut retainer to be mechanically attached to the substructure for them to work. Additionally, the current two-piece fastener systems far outperform any one-sided fastener system.

Accordingly, those skilled in the art continue with research and development efforts to improve one-sided fastener systems for joining multiple substrates.

Document US 2007/0297869 A1, with its abstract, describes a through insert with floating capability comprising a stud, a nut and a cap. The stud comprises a flat base portion and a cylindrical stud portion mounted onto the flat base portion. The cylindrical stud portion comprises a stud cylinder aperture. The nut is inside the stud cylinder aperture. The cap comprises a flat cap portion and a cylindrical cap portion mounted onto the flat cap portion. The cylindrical cap portion receives the cylindrical stud portion.

### SUMMARY

Disclosed are examples of nut retainer assemblies for blind fastener systems, blind fastener systems and methods for assembling nut retainer assemblies on substrates. In particular, the present disclosure defines a nut retainer assembly for a blind fastener system comprising the features described at claim 1. The dependent claims outline advantageous forms of embodiment of the nut retainer assembly.

In an example, a nut retainer assembly for a blind fastener system includes a bond washer and a nut retainer. The bond washer defines a longitudinal axis extending from a proximal washer end to a distal washer end. The bond washer includes a flange portion, a washer coupling portion, a first interior surface, a second interior surface and a bonding surface. The flange portion is at the proximal washer end. The washer coupling portion extends from the flange portion to the distal washer end. The first interior surface is associated with the flange portion and defines a first aperture. The second interior surface is associated with the washer coupling portion and includes internal threads. The bonding surface is associated with the flange portion at the proximal washer end. The nut retainer defines a proximal retainer end and a distal retainer end along the longitudinal axis and extending the longitudinal axis from the distal washer end to the distal retainer end. The nut retainer includes a retainer coupling portion, a nut retaining portion, a first exterior surface and a third interior surface. The retainer coupling portion at the proximal retainer end. The nut retaining portion extends from the retainer coupling portion to the distal retainer end. The first exterior surface is associated with the retainer coupling portion. The third interior surface is associated with the retainer coupling portion and the nut retaining portion. The third interior surface defines a central opening extending from the proximal retainer end to the distal retainer end.

In an example, another nut retainer assembly for a blind fastener system includes a nut retainer. The nut retainer defines a longitudinal axis extending from a proximal retainer end to a distal retainer end. The nut retainer includes a flange portion, a nut retaining portion, a sixth interior surface and a bonding surface. The flange portion at the proximal retainer end. The nut retaining portion extends from the flange portion to the distal retainer end. The sixth interior surface is associated with the flange portion and the nut retaining portion. The sixth interior surface defines a central opening extending from the proximal retainer end to the distal retainer end. The bonding surface associated with the flange portion at the proximal retainer end.

In an example, a blind fastener system includes a fastener bolt, a first substrate, a second substrate, a fastener nut and a nut retainer assembly. The fastener bolt includes a head portion, a shank portion and a threaded portion. The first substrate includes a first through hole sized to provide a first clearance fit for the fastener bolt and defines a first clamping surface to receive the fastener bolt. The first substrate also defines a first working surface. The second substrate includes a second through hole sized to provide a second clearance fit for the fastener bolt and defining a second clamping surface facing the first clamping surface. The second substrate also includes a second working surface to receive the fastener bolt. The fastener nut is for placement on the first working surface of the first substrate over the first through bore. The fastener nut includes a threaded bore. The nut retainer assembly defines a central opening sized and shaped to fit over and retain the fastener nut on the first working surface of the first substrate. The nut retainer assembly includes a bonding surface bordering the central opening. With the fastener nut disposed within the central opening, at least a portion of the bonding surface is bonded to the first working surface of the first substrate such that the second through hole of the second substrate, the first through hole of the first substrate and the threaded bore of the fastener nut provide for insertion of the fastener bolt and threaded engagement of the threaded portion of the fastener bolt with the threaded bore of the fastener nut.

In an example, a method for assembling a nut retainer assembly on a substrate includes: (1) predrilling a hole through the substrate at a predetermined location for the nut retainer assembly; (2) applying an adhesive to at least a portion of a bonding surface on a bond washer of the nut retainer assembly; (3) bonding the bond washer over the hole in the substrate using the adhesive such that the hole is centered in relation to a first aperture through the bond washer; (4) positioning a fastener nut over the bond washer; (5) positioning a nut retainer with a central opening over the fastener nut and the bond washer, the nut retainer having external threads for engagement with internal threads of the bond washer, the central opening providing a clearance fit for the fastener nut; and (6) turning the nut retainer into threaded engagement with the bond washer to retain the fastener nut within the nut retainer assembly on the substrate.

In an example, another method for assembling a nut retainer assembly on a substrate includes: (1) predrilling a hole through the substrate at a predetermined location for the nut retainer assembly; (2) applying an adhesive to at least a portion of a bonding surface on a nut retainer of the nut retainer assembly; (3) positioning a fastener nut in a central opening of the nut retainer, the central opening providing a clearance fit for the fastener nut; and (4) bonding the nut retainer over the hole in the substrate using the adhesive such that the hole is centered in relation to the central opening and the fastener nut is retained within the nut retainer assembly on the substrate.

Other examples of the disclosed nut retainer assemblies for blind fastener systems, blind fastener systems and methods for assembling nut retainer assemblies on substrates will become apparent from the following detailed description, the accompanying drawings and the appended claims.

### BRIEF DESCRIPTION OF THE DRAWINGS

Fig. 1 is an exploded view of an example of a nut retainer assembly for a blind fastener system;
Fig. 2 is a cross-sectional side view of an example of a blind fastener system;
Fig. 3 is a cross-sectional side view of a portion of an example of a bond washer for the nut retainer assembly of Fig. 1;
Fig. 4 is a cross-sectional side view of the nut retainer assembly of Fig. 1 positioned on a working surface of a substrate at a predetermined location for a hole through the substrate;
Fig. 5 is a cross-sectional side view of the nut retainer assembly of Fig. 1 with a fastener nut retained therein;
Fig. 6 is an exploded view of another example of a nut retainer assembly of Fig. 1 with a grip retainer extension and a grip extension washer;
Fig. 7 is a cross-sectional side view of the nut retainer assembly of Fig. 1 with a nonconductive cap;
Fig. 8 is an exploded view of yet another example of a nut retainer assembly that includes a seal washer;
Fig. 9 is a cross-sectional side view of the nut retainer assembly of Fig. 8 with a nonconductive cap and a fastener nut retained therein;
Fig. 10 is an exploded view of still another example of a nut retainer assembly that includes a retention washer;
Fig. 11 is a cross-sectional side view of the nut retainer assembly of Fig. 10 with a nonconductive cap and a fastener nut retained therein;
Fig. 12 is a cross-sectional side view of portions of examples of a bond washer, a retention washer and a nut retainer for the nut retainer assembly of Fig. 10;
Fig. 13 is an exploded view of still yet another example of a nut retainer assembly that includes a seal washer and a retention washer;
Fig. 14 is a cross-sectional side view of the nut retainer assembly of Fig. 13 with a nonconductive cap and a fastener nut retained therein;
Fig. 15 is an exploded view of another example of a nut retainer assembly for a blind fastener system;
Fig. 16 is a cross-sectional side view of the nut retainer assembly of Fig. 15 with a fastener nut retained therein;
Fig. 17 is an exploded view of yet another example of a nut retainer assembly for a blind fastener system;
Fig. 18 is a cross-sectional side view of the nut retainer assembly of Fig. 16 with a nonconductive cap and a fastener nut retained therein;
Fig. 19 is a flow diagram of an example of a method for assembling a nut retainer assembly on a substrate;
Fig. 20 is a flow diagram of another example of a method for assembling a nut retainer assembly on a substrate;
Fig. 21 is a block diagram of aircraft production and service methodology that implements one or more of the examples of methods for assembling a nut retainer assembly on a substrate disclosed herein; and
Fig. 22 is a schematic illustration of an aircraft that incorporates workpieces with multiple substrates that are joined using one or more of the examples of nut retainer assemblies, blind fastener systems and methods for assembling a nut retainer assembly on a substrate disclosed herein.

### DETAILED DESCRIPTION

The various examples of nut retainer assemblies and blind fastener systems disclosed herein provide a high torque bonded nut retainer assembly for high strength one-sided fastener applications. Various configurations allow existing fasteners (e.g., fastener bolts and fastener nuts) to be installed in a one-sided application without damage and/or modifying the underlying substructure. The nut retainer assemblies can be used in locations where it is not desirable to add additional retaining features and/or damage the substrate material for the nut to be locked in place. The nut retainer assemblies utilize bond strength to counteract the torque of the fastener. The nut retainer assemblies and blind fastener systems can be used with off-the-shelf fastening standards with known characteristics and requirements. This eliminates or reduces the need to test the joint configuration.

The various examples of nut retainer assemblies rely on a bonded surface to retain the nut until the fastener has sufficient clamp up force with the substructure. Once the sufficient clamp up force is achieved, the fastener nut takes the compressive load until a final torque is achieved. The bonded surface area is between a bonding surface on the nut retainer assembly and a working surface of a substate. The bond needs to be held just long enough such that the nut can clamp up on the surface. If there is not sufficient bonding area, the nut cannot clamp up. Torque values tested met or exceeded head side drive torque limits for brass, aluminum, titanium, A286, 300-series corrosion-resistant steel and Inconel/nickel alloy 718 fasteners with nuts. The nut retainer assemblies can be used in applications requiring a structural one-sided fastener and, particularly, in locations where there is insufficient access to install a two-part fastener system. The bonded nut retainers can be preinstalled on the substrate, then head side drive fasteners can be installed from an exterior working surface of another substrate.

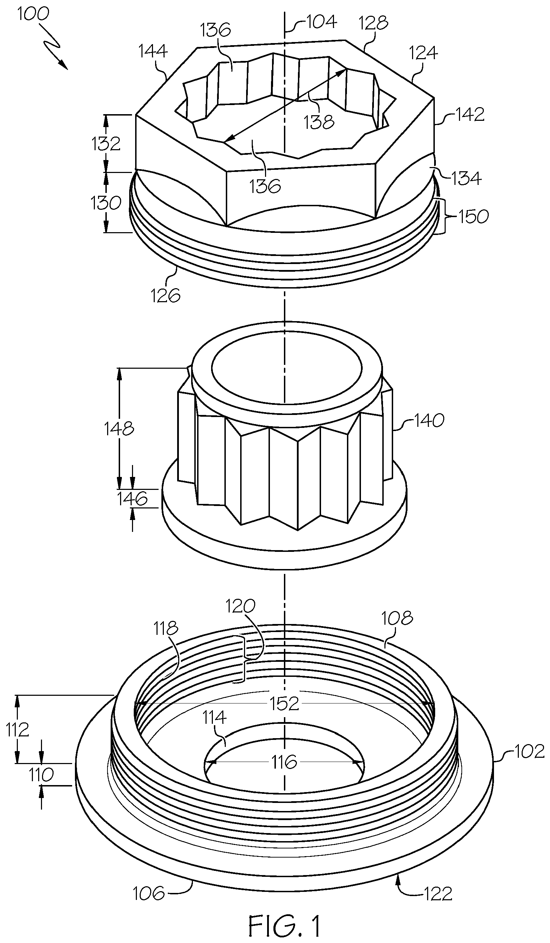

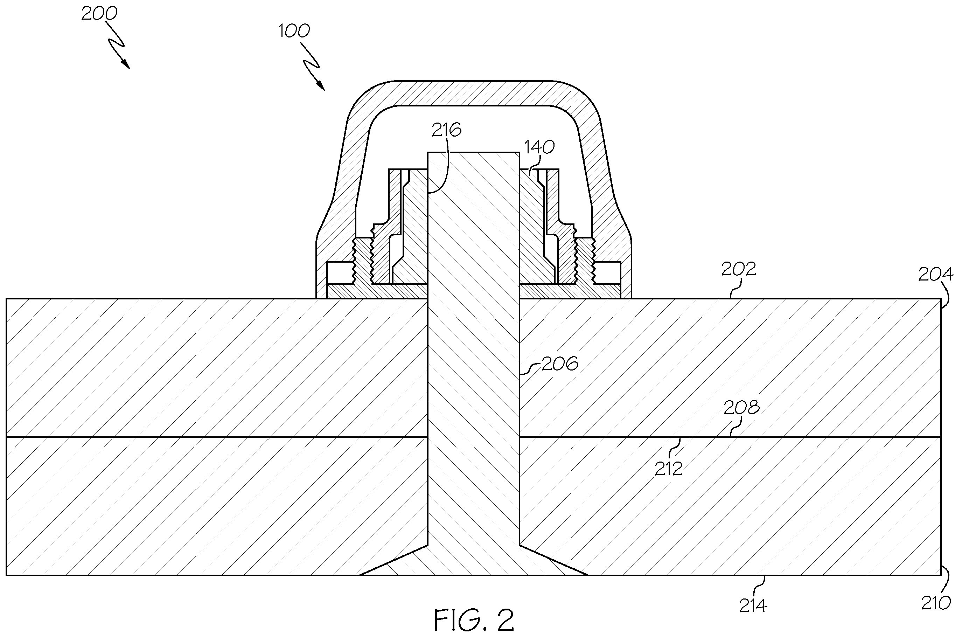

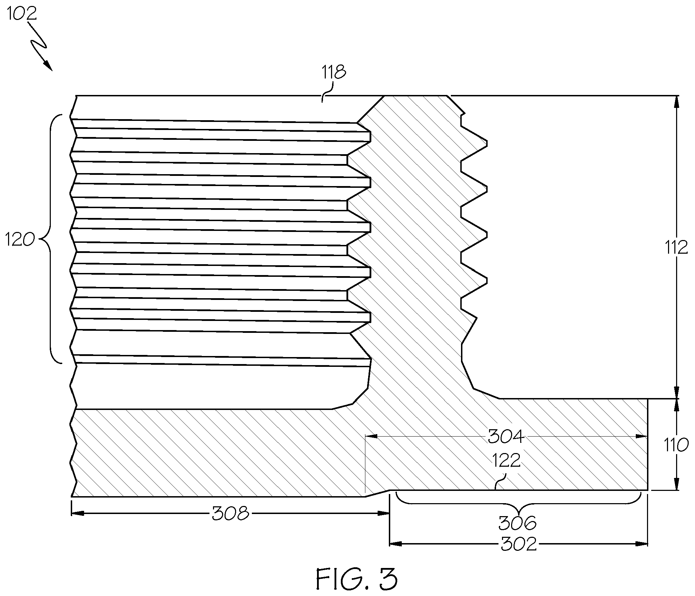

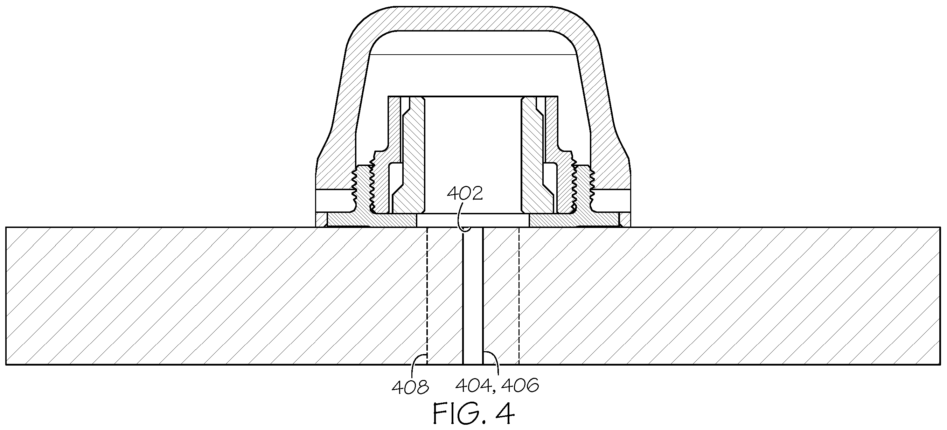

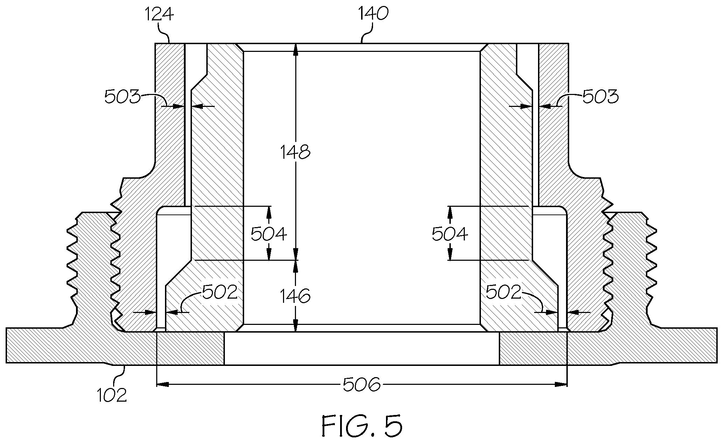

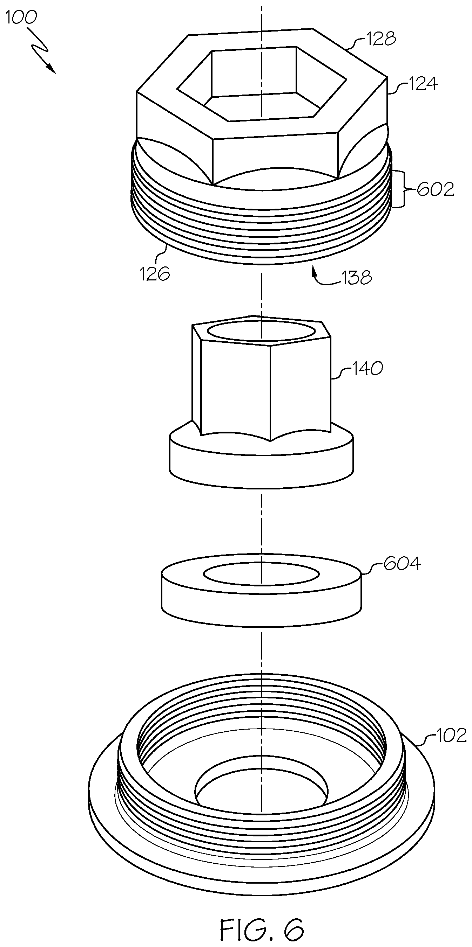

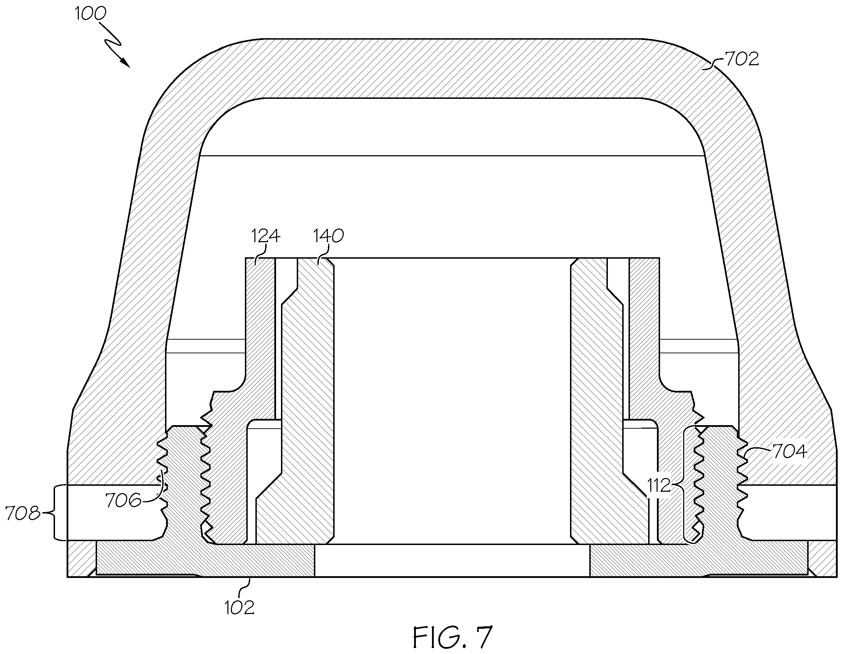

Referring generally to Figs. 1-14, by way of examples, the present disclosure is directed to a nut retainer assembly 100 for a blind fastener system 200. Fig. 1 discloses an example of the nut retainer assembly 100. Fig. 2 discloses an example of the blind fastener system 200. Fig. 3 shows a cross-sectional side view of a portion of an example of a bond washer 102 for the nut retainer assembly 100 of Fig. 1. Fig. 4 shows a cross-sectional side view of the nut retainer assembly 100 of Fig. 1 positioned on a working surface 202 of a substrate 204 at a predetermined location 402 for a hole 404 through the substrate 204. Fig. 5 shows a cross-sectional side view of the nut retainer assembly 100 of Fig. 1 with a fastener nut 140 retained therein. Fig. 6 shows an exploded view of another example of the nut retainer assembly 100 of Fig. 1 with a grip retainer extension 602 and a grip extension washer 604. Fig. 7 shows a cross-sectional side view of the nut retainer assembly 100 of Fig. 1 with a nonconductive cap 702 and a fastener nut 140 retained therein.

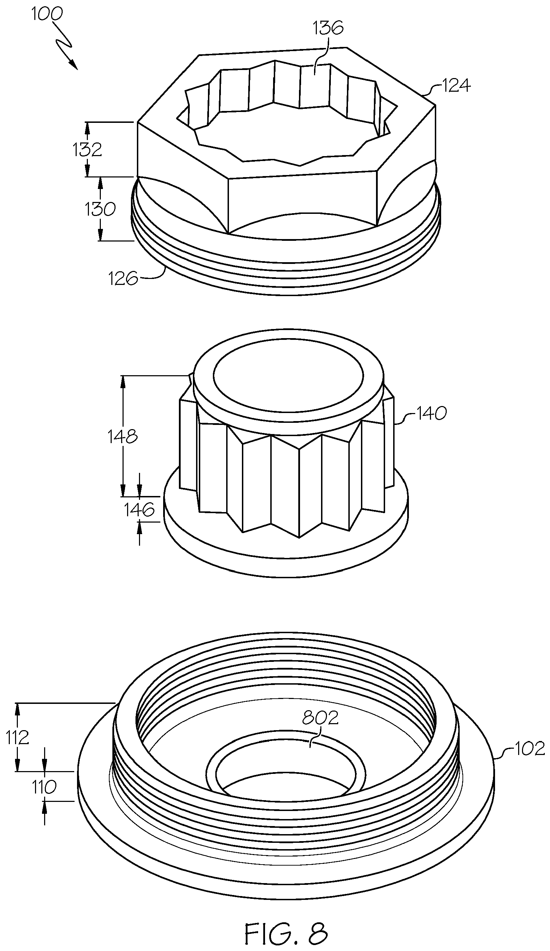

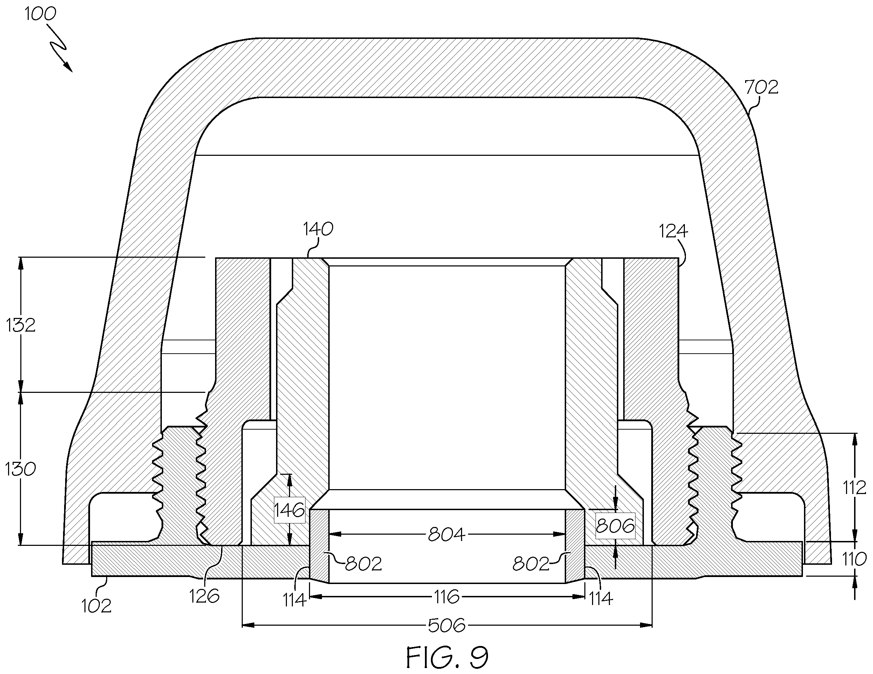

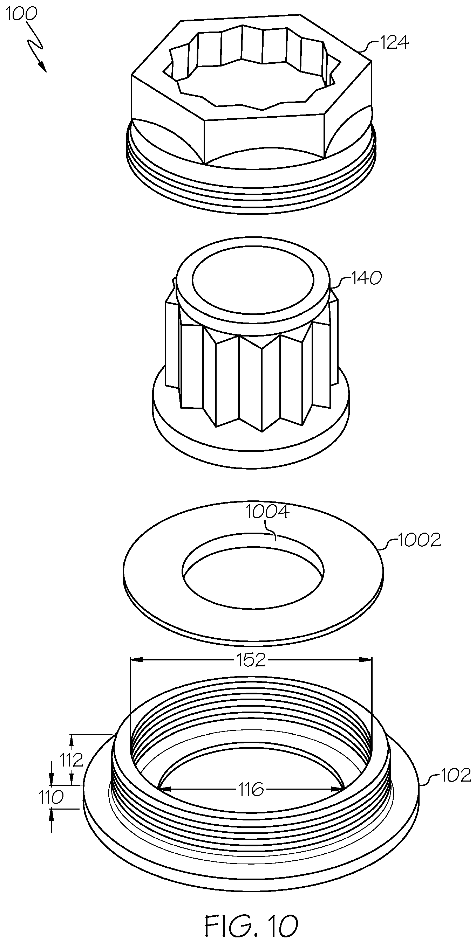

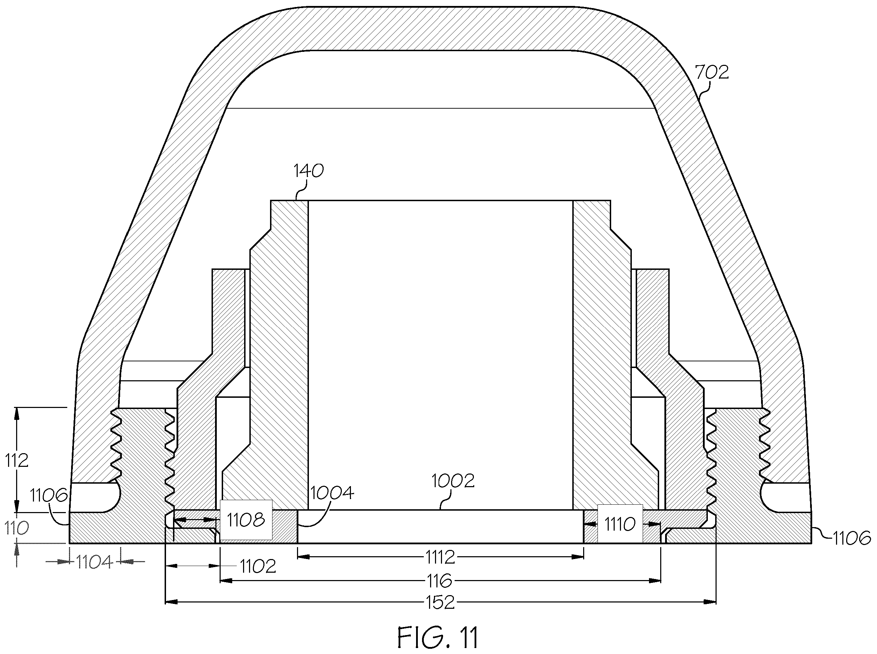

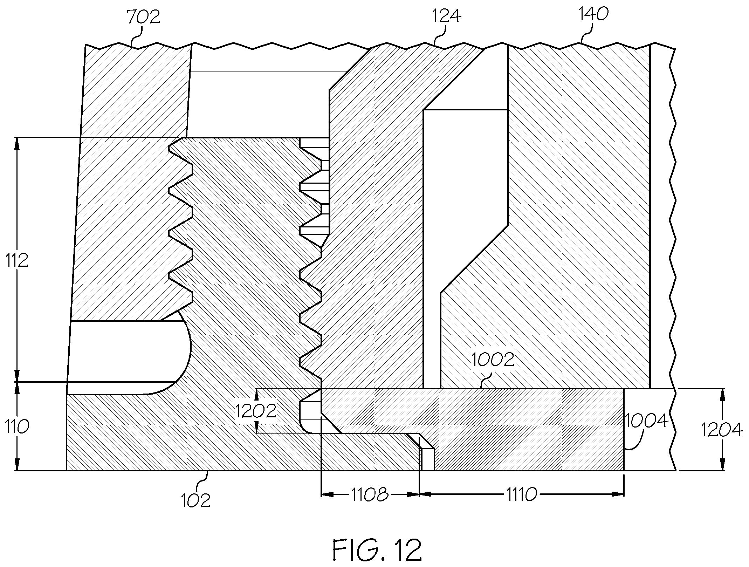

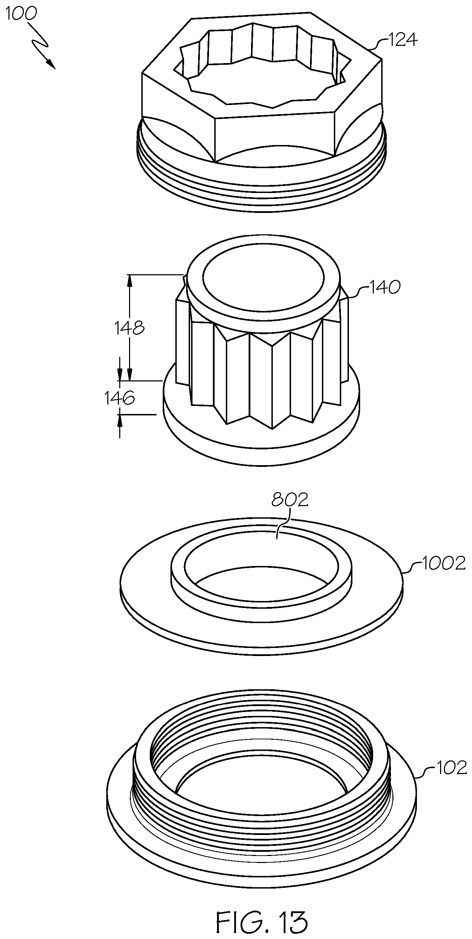

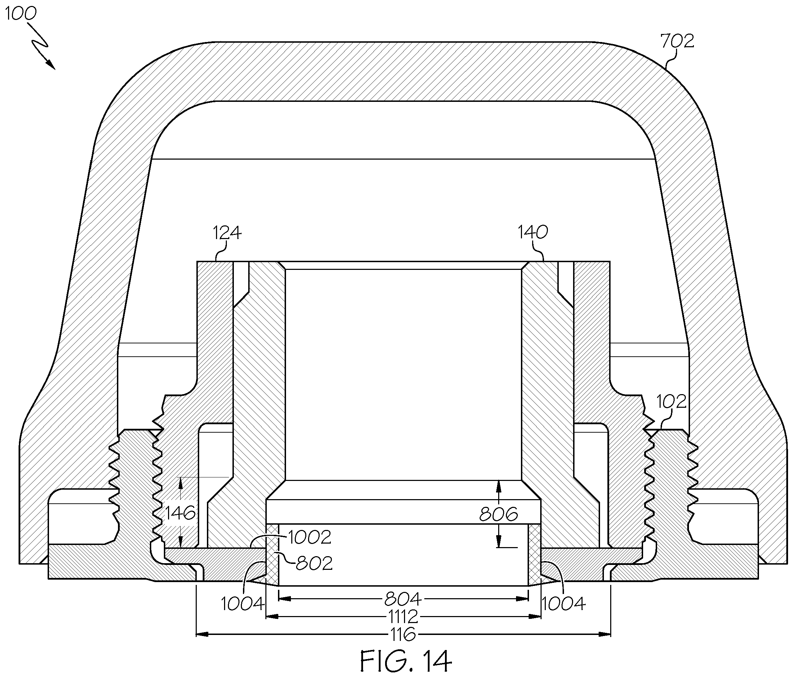

Fig. 8 show an exploded view of yet another example of a nut retainer assembly 100 that includes a seal washer 802. Fig. 9 shows a cross-sectional side view of the nut retainer assembly 100 of Fig. 8 with a nonconductive cap 702 and a fastener nut 140 retained therein. Fig. 10 shows an exploded view of still another example of a nut retainer assembly 100 that includes a retention washer 1002. Fig. 11 shows a cross-sectional side view of the nut retainer assembly 100 of Fig. 10 with a nonconductive cap 702 and a fastener nut 140 retained therein. Fig. 12 shows a cross-sectional side view of portions of examples of a bond washer 102, a retention washer 1002 and a nut retainer 124 for the nut retainer assembly 100 of Fig. 10. Fig. 13 shows an exploded view of still yet another example of a nut retainer assembly 100 that includes a seal washer 802 and a retention washer 1002. Fig. 14 shows a cross-sectional side view of the nut retainer assembly 100 of Fig. 13 with a nonconductive cap 702 and a fastener nut 140 retained therein.

With reference again to Figs. 1-14, in one or more examples, a nut retainer assembly 100 for a blind fastener system 200 includes a bond washer 102 and a nut retainer 124. The bond washer 102 defines a longitudinal axis 104 extending from a proximal washer end 106 to a distal washer end 108. The bond washer 102 includes a flange portion 110, a washer coupling portion 112, a first interior surface 114, a second interior surface 118 and a bonding surface 122. The flange portion 110 is at the proximal washer end 106. The washer coupling portion 112 extends from the flange portion 110 to the distal washer end 108. The first interior surface 114 is associated with the flange portion 110. The first interior surface 114 defines a first aperture 116. The second interior surface 118 is associated with the washer coupling portion 112. The second interior surface 118 includes internal threads 120. The bonding surface 122 is associated with the flange portion 110 at the proximal washer end 106.

The nut retainer 124 defines a proximal retainer end 126 and a distal retainer end 128 along the longitudinal axis 104 and extends the longitudinal axis 104 from the distal washer end 108 to the distal retainer end 128. The nut retainer 124 includes a retainer coupling portion 130, a nut retaining portion 132, a first exterior surface 134 and a third interior surface 136. The retainer coupling portion 130 is at the proximal retainer end 126. The nut retaining portion 132 extends from the retainer coupling portion 130 to the distal retainer end 128. The first exterior surface 134 is associated with the retainer coupling portion 130. The third interior surface 136 is associated with the retainer coupling portion 130 and the nut retaining portion 132. The third interior surface 136 defines a central opening 138 extending from the proximal retainer end 126 to the distal retainer end 128.

In another example of the nut retainer assembly 100, the bond washer 102 includes a metal material. In a further example, the metal material includes titanium, tungsten carbide, tungsten, high-strength corrosion-resistant steel, stainless steel or any other suitable metal material in any suitable combination.

In yet another example of the nut retainer assembly 100, the nut retainer 124 includes a metal material. In a further example, the metal material includes titanium, tungsten carbide, tungsten, high-strength corrosion-resistant steel, stainless steel or any other suitable metal material in any suitable combination.

In still another example of the nut retainer assembly 100, the bond washer 102 is configured to be bonded to a working surface 202 of a substrate 204 using an adhesive 306. The bond washer 102 being positioned over a predetermined location 402 for a hole 404 through which a fastener bolt 206 is subsequently inserted from a clamping surface 208 of the substrate 204 for engagement with a fastener nut 140 retained by the nut retainer assembly 100.

In a further example, the adhesive 306 includes a BAC1010 adhesive, a type 111 adhesive, an EA 9394 adhesive, a BAC5010 adhesive, a type 106 adhesive, a type 70 adhesive, a type 117 adhesive or any other suitable adhesive in any suitable combination. In another further example, the hole 404 includes pilot hole 406 predrilled at the predetermined location 402 in conjunction with the bond washer 102 being bonded to the working surface 202 of the substrate 204. In yet another further example, the hole 404 includes a full-sized hole 408 predrilled at the predetermined location 402 in conjunction with the bond washer 102 being bonded to the working surface 202 of the substrate 204.

In still yet another example of the nut retainer assembly 100, the third interior surface 136 associated with the retainer coupling portion 130 and the nut retaining portion 132 is sized and shaped to fit over a fastener nut 140 between the nut retainer 124 and the bond washer 102. In this example, the first exterior surface 134 associated with the retainer coupling portion 130 is threaded for engagement with the internal threads 120 in the washer coupling portion 112 to retain the fastener nut 140 between the nut retainer 124 and the bond washer 102.

In a further example, the nut retainer 124 also includes a second exterior surface 142 associated with the nut retaining portion 132 extending from the retainer coupling portion 130 to the distal retainer end 128. In this example, the second exterior surface 142 associated with the nut retaining portion 132 is sized and shaped to provide a torquing feature 144 proximate the distal retainer end 128 for securing the nut retainer 124 within the nut retainer assembly 100 and for removing the nut retainer 124 from the nut retainer assembly 100. In an even further example, the torquing feature 144 includes a 4-point torquing feature, a 6-point torquing feature, a 12-point torquing feature or any other suitable shape for the torquing feature 148.

In another further example, the third interior surface 136 associated with the retainer coupling portion 130 and the nut retaining portion 132 of the nut retainer 124 is sized and shaped to provide a first horizontal float 502 between a compressive feature 146 of the fastener nut 140 and the nut retainer 124 and a second horizontal float 503 between a torquing feature 148 of the fastener nut 140 and the nut retainer 124. In an even further example, the first horizontal float 502 includes 20 thousandths of an inch, 18 thousandths to 22 thousandths of an inch, 15 thousandths to 25 thousandths of an inch or any other suitable dimension or range of dimensions for the first horizontal float 502. In another even further example, the second horizontal float 503 includes 9 thousandths of an inch, 7 thousandths to 11 thousandths of an inch, 5 thousandths to 13 thousandths of an inch or any other suitable dimension or range of dimensions for the second horizontal float 503.

In yet another further example, the third interior surface 136 associated with the retainer coupling portion 130 is sized and shaped to provide a vertical float 504 between a compressive feature 146 of the fastener nut 140 and the nut retainer 124. In an even further example, the vertical float 504 includes five thousandths of an inch, four thousandths to six thousandths of an inch, three thousandths to seven thousandths of an inch or any other suitable dimension or range of dimensions for the vertical float 504.

In still another further example, a portion of the central opening 138 proximate the distal retainer end 128 is sized and shaped to provide a clearance fit for a torquing feature 148 of the fastener nut 140 while preventing the fastener nut 140 from turning when it is retained between the nut retainer 124 and the bond washer 102. In an even further example, the portion of the central opening 138 proximate the distal retainer end 128 is sized to fit the torquing feature 148 a 1/4 inch fastener nut, a 5/16 inch fastener nut, a 3/8 inch fastener nut, a 7/16 inch fastener nut, a 1/2 inch fastener nut, a 9/16 inch fastener nut, a 5/8 inch fastener nut, an 11/16 inch fastener nut, a 3/4 inch fastener nut, a 13/16 inch fastener nut, a 7/8 inch fastener nut, a 15/16 inch fastener nut, a one inch fastener nut or any other suitable dimension for the fastener nut 140. In another even further example, the portion of the central opening 138 proximate the distal retainer end 128 is sized to fit the torquing feature 148 of a 6 mm fastener nut, a 8 mm fastener nut, a 9 mm fastener nut, a 10 mm fastener nut, an 11 mm fastener nut, a 12 mm fastener nut, a 13 mm fastener nut, a 14 mm fastener nut, a 15 mm fastener nut, a 16 mm fastener nut, a 17 mm fastener nut, a 18 mm fastener nut, a 19 mm fastener nut, a 20 mm fastener nut or any other suitable dimension for the fastener nut 140. In yet another even further example, the portion of the central opening 138 proximate the distal retainer end 128 is shaped to fit the torquing feature 148 of a 4-point fastener nut, a 6-point fastener nut, a 12-point fastener nut or any other suitable shape for the torquing feature 148.

In another example of the nut retainer assembly 100, the nut retainer 124 also includes a grip retainer extension 602 between the proximal retainer end 126 and the distal retainer end 128. In a further example, the grip retainer extension 602 enables the nut retainer assembly 100 to be used for a fastener bolt 206 with a longer grip length.

In yet another example, the nut retainer assembly 100 also includes a grip extension washer 604 disposed within the central opening 138 at the proximal retainer end 126 between a fastener nut 140 retained within the nut retainer 124 and the bond washer 102. In a further example, the grip extension washer 604 enables the nut retainer assembly 100 to be used for a fastener bolt 206 with a longer grip length.

In still another example, the nut retainer assembly 100 also includes a nonconductive cap 702 to protect an operational environment within which the nut retainer assembly 100 is used from electromagnetic emissions and electrical sparks discharged by metal components 102, 124 of the nut retainer assembly 100 and metal fasteners 140, 206 associated therewith. A third exterior surface 704 associated with the washer coupling portion 112 is configured to receive and engage with the nonconductive cap 702.

In still yet another example of the nut retainer assembly 100, a fourth interior surface 706 associated with the nonconductive cap 702 and the third exterior surface 704 of the washer coupling portion 112 are threaded for engagement of the nonconductive cap 702 on the bond washer 102.

In a further example, a fourth interior surface 706 associated with the nonconductive cap 702 and the third exterior surface 704 of the washer coupling portion 112 are configured for twist-lock engagement.

In another further example, the nonconductive cap 702 is transparent to permit internal inspection after the nut retainer assembly 100 is assembled with a fastener nut 140 retained therein.

In yet another further example, the nonconductive cap 702 includes a transparent polymer material. In an even further example, the transparent polymer material includes a transparent nylon material, a nylon TMDT material, a nylon 6-3-T material, a trimethylhexamethylenediamine material, a dimethyl terephthalate material or any other suitable transparent polymer material in any suitable combination.

In still another further example, the nonconductive cap 702 includes a port 708 for receipt of a nonconductive sealant between a fourth interior surface 706 associated with the nonconductive cap 702 and the third exterior surface 704 associated with the washer coupling portion 112 after the nut retainer assembly 100 is assembled with a fastener nut 140 retained therein to enhance protection of the operational environment from electromagnetic emissions and electrical sparks discharged by metal components 102, 124 of the nut retainer assembly 100 and metal fasteners 140, 206 associated therewith.

In another example of the nut retainer assembly 100, the retainer coupling portion 130 includes external threads 150 for engagement with the internal threads 120 in the washer coupling portion 112 to retain a fastener nut 140 between the nut retainer 124 and the bond washer 102. After the retainer coupling portion 130 and the washer coupling portion 112 are fully engaged, the proximal retainer end 126 sits on the flange portion 110 of the bond washer 102 and at least a portion of a compressive feature 146 of the fastener nut 140 sits on the flange portion 110.

In a further example, the bonding surface 122 of the bond washer 102 includes a recessed area 302 along a peripheral portion 304 of the bonding surface 122 for receipt of an adhesive 306 and a contact area 308 extending from the recessed area 302 to the first aperture 116 of the flange portion 110. In an even further example, the adhesive 306 includes a BAC1010 adhesive, a type 111 adhesive, an EA 9394 adhesive, a BAC5010 adhesive, a type 106 adhesive, a type 70 adhesive, a type 117 adhesive or any other suitable adhesive in any suitable combination. In another even further example, the recessed area 302 is recessed in relation to the contact area 308 by five thousandths of an inch, four thousandths to six thousandths of an inch, three thousandths to seven thousandths of an inch or any other suitable dimension for the recess. In yet another even further example, the bond washer 102 is configured to be bonded to a working surface 202 of a substrate 204 using the adhesive 306. The bond washer 102 being positioned over a predetermined location 402 for a hole 404 through which a fastener bolt 206 is subsequently inserted from a clamping surface 208 of the substrate 204 for engagement with a fastener nut 140 retained by the nut retainer assembly 100.

In another further example, the first aperture 116 in the flange portion 110 of the bond washer 102 is sized to provide a clearance fit for a fastener bolt 206 associated with the fastener nut 140. In this example, the third interior surface 136 associated with the retainer coupling portion 130 defines a second aperture 506 wider than the first aperture 116 and sized to provide a clearance fit for the fastener nut 140 at the proximal retainer end 126.

In yet another example of the nut retainer assembly 100, the third interior surface 136 associated with the retainer coupling portion 130 defines a second aperture 506 wider than the first aperture 116 and sized to provide a clearance fit for the fastener nut 140 at the proximal retainer end 126. In this example, the nut retainer assembly 100 also includes a seal washer 802 disposed within the first aperture 116 and affixed to the first interior surface 114 associated with the flange portion 110 of the bond washer 102 after the nut retainer 124 and the bond washer 102 are assembled with a fastener nut 140 retained therein. In a further example, the first aperture 116 is sized to provide an interference fit for the seal washer 802. The seal washer 802 defines a third aperture 804 sized to provide an interference fit for a fastener bolt 206 associated with the fastener nut 140.

In another further example, the seal washer 802 includes a nonconductive polymer material. In an even further example, the nonconductive polymer material includes a polyether ether ketone material, a polyaryle ether ketone material, a polyether ketone material, a polyether ketone ether ketone ketone material, a polyetherimide material or any other suitable nonconductive polymer material. In yet another further example, the seal washer 802 enhances protection of an operational environment within which the nut retainer assembly 100 is used from electromagnetic emissions and electrical sparks discharged by metal components 102, 124 of the nut retainer assembly 100 and metal fasteners 140, 206 associated therewith. In still another further example, the seal washer 802 acts as a fluid barrier in relation to the blind fastener system 200. In still yet another further example, the seal washer 802 extends from the first interior surface 114 associated with the flange portion 110 of the bond washer 102 to at least part of a non-threaded bore 806 in the compressive feature 146 of the fastener nut 140.

In still another example of the nut retainer assembly 100, the washer coupling portion 112 defines a fourth aperture 152 wider than the first aperture 116 in the flange portion 110 of the bond washer 102 thereby defining an inner portion 1102 of the flange portion 110 extending from the washer coupling portion 112 to the first aperture 116 and an outer portion 1104 extending from the washer coupling portion 112 to a fourth exterior surface 1106 associated with the flange portion 110.

In a further example, the nut retainer assembly 100 also includes a retention washer 1002 with a fifth interior surface 1004, a lip portion 1108 and a nut support portion 1110. The fifth interior surface 1004 defining a fifth aperture 1112. The lip portion 1108 having a first thickness 1202. The nut support portion 1110 having a second thickness 1204 greater than the first thickness 1202. The retention washer 1002 disposed within the fourth aperture 152 of the washer coupling portion 112 with the lip portion 1108 overlaying the inner portion 1102 of the flange portion 110 for the bond washer 102 and the nut support portion 1110 extending into the first aperture 116 of the flange portion 110.

In another further example, the retention washer 1002 includes a metal material. In an even further example, the metal material includes titanium, tungsten carbide, tungsten, high-strength corrosion-resistant steel, stainless steel or any other suitable metal material in any suitable combination. In yet another further example, the first aperture 116 in the flange portion 110 of the bond washer 102 is sized to provide a clearance fit for the nut support portion 1110 of the retention washer 1002. The fourth aperture 152 of the washer coupling portion 112 is sized to provide a clearance fit for the lip portion 1108 of the retention washer 1002. The fifth aperture 1112 of the retention washer 1002 is sized to provide a clearance fit for a fastener bolt 206 associated with a fastener nut 140. In still another further example, the third interior surface 136 associated with the retainer coupling portion 130 and the nut retaining portion 132 of the nut retainer 124 is sized and shaped to fit over a fastener nut 140 between the nut retainer 124 and the retention washer 1002.

In still yet another further example, the retainer coupling portion 130 includes external threads 150 for engagement with the internal threads 120 in the washer coupling portion 112 to retain a fastener nut 140 between the nut retainer 124 and the retention washer 1002. After the retainer coupling portion 130 and the washer coupling portion 112 are fully engaged, the proximal retainer end 126 sits on the lip portion 1108 of the retention washer 1002, at least a portion of a compressive feature 146 of the fastener nut 140 sits on the nut support portion 1110 of the retention washer 1002 and the nut support portion 1110 of the retention washer 1002 extends beyond the first aperture 116 in the flange portion 110 of the bond washer 102 to provide a contact surface 1206 configured to sit on a working surface 202 of a substrate 204 prior to the bond washer 102.

In another further example, the nut retainer 124 also includes a grip retainer extension 602 between the proximal retainer end 126 and the distal retainer end 128. In yet another further example, the nut retainer assembly 100 also includes a grip extension washer 604 disposed within the central opening 138 at the proximal retainer end 126 between a fastener nut 140 retained within the nut retainer 124 and the retention washer 1002.

In still another further example, the nut retainer assembly 100 also includes a seal washer 802 disposed within the fifth aperture 1112 of the retention washer 1002 and affixed to the fifth interior surface 1004 associated with the retention washer 1002 after the nut retainer 124, the retention washer 1002 and the bond washer 102 are assembled with a fastener nut 140 retained therein. In an even further example, the fifth aperture 1112 of the retention washer 1002 is sized to provide an interference fit for the seal washer 802 and the seal washer 802 defines a third aperture 804 sized to provide an interference fit for a fastener bolt 206 associated with the fastener nut 140. In another even further example, the seal washer 802 includes a nonconductive polymer material. In an even yet further example, the nonconductive polymer material includes a polyether ether ketone material, a polyaryle ether ketone material, a polyether ketone material, a polyether ketone ether ketone ketone material, a polyetherimide material or any other suitable nonconductive polymer material in any suitable combination.

In yet another even further example, the seal washer 802 enhances protection of an operational environment within which the nut retainer assembly 100 is used from electromagnetic emissions and electrical sparks discharged by metal components 102, 124, 1002 of the nut retainer assembly 100 and metal fasteners 140, 206 associated therewith. In still another even further example, the seal washer 802 acts as a fluid barrier in relation to the blind fastener system 200. In still yet another even further example, the seal washer 802 extends from the fifth interior surface 1004 associated with the retention washer 1002 to at least part of a non-threaded bore 806 in a compressive feature 146 of the fastener nut 140.

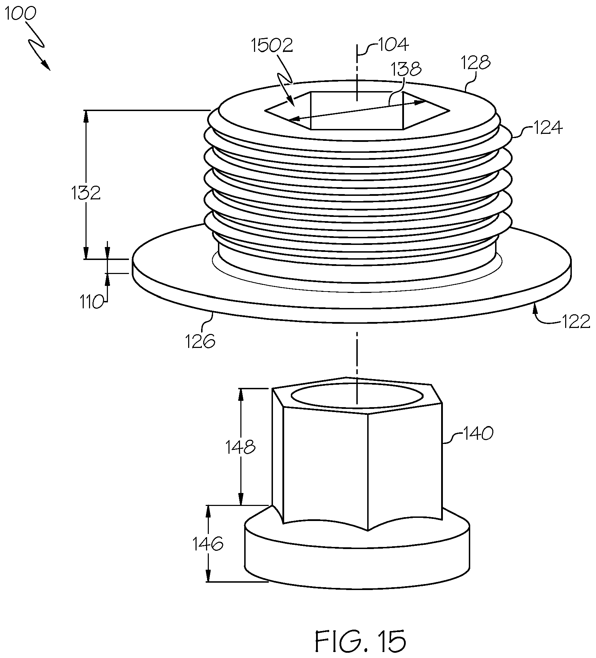

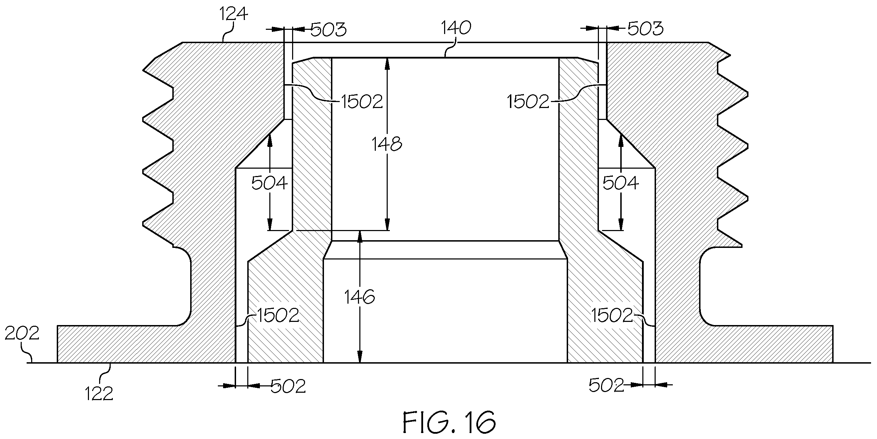

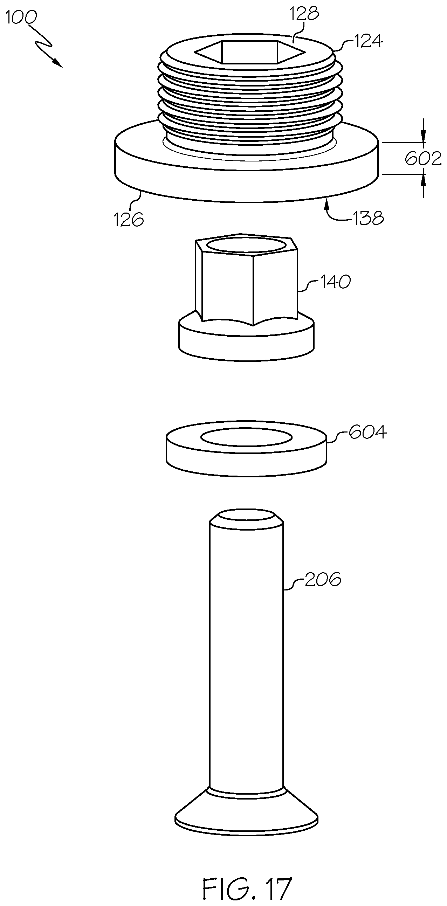

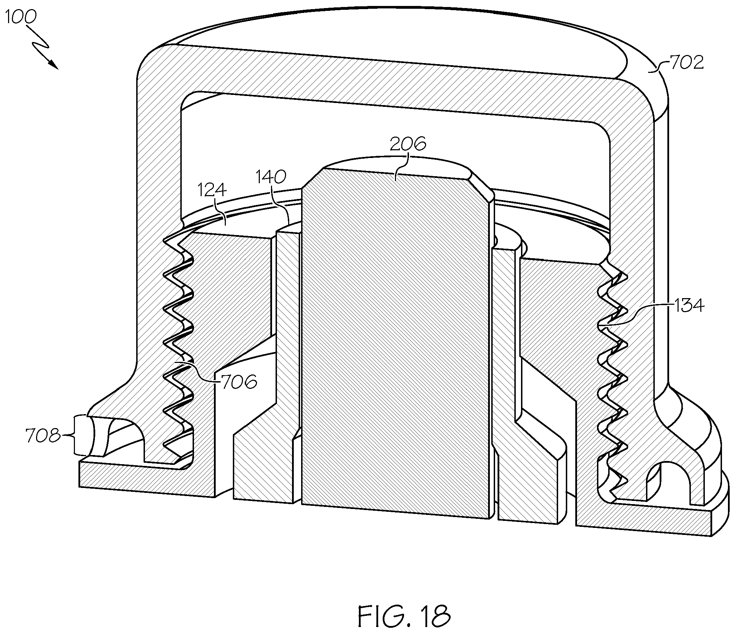

Referring generally to Figs. 15-18, by way of examples, the present disclosure is directed to a nut retainer assembly 100 for a blind fastener system 200. Fig. 15 discloses an example of the nut retainer assembly 100. Fig. 16 shows a cross-sectional side view of the nut retainer assembly 100 of Fig. 15 with a fastener nut 140 retained therein. Fig. 17 shows an exploded view of another example of the nut retainer assembly 100 of Fig. 1 with a grip retainer extension 602 and a grip extension washer 604. Fig. 18 shows a cross-sectional side view of the nut retainer assembly 100 of Fig. 15 with a nonconductive cap 702 and a fastener nut 140 retained therein.

With reference again to Figs. 15-18, in one or more examples, a nut retainer assembly 100 for a blind fastener system 200 includes a nut retainer 124 defining a longitudinal axis 104 extending from a proximal retainer end 126 to a distal retainer end 128. The nut retainer 124 includes a flange portion 110, a nut retaining portion 132, a sixth interior surface 1502 and a bonding surface 122. The flange portion 110 at the proximal retainer end 126. The nut retaining portion 132 extending from the flange portion 110 to the distal retainer end 128. The sixth interior surface 1502 is associated with the flange portion 110 and the nut retaining portion 132. The sixth interior surface 1502 defines a central opening 138 extending from the proximal retainer end 126 to the distal retainer end 128. The bonding surface 122 associated with the flange portion 110 at the proximal retainer end 126.

In another example of the nut retainer assembly 100, the nut retainer 124 includes a metal material. In a further example, the metal material includes titanium, tungsten carbide, tungsten, high-strength corrosion-resistant steel, stainless steel or any other suitable metal material in any suitable combination.

In yet another example of the nut retainer assembly 100, the nut retainer 124 is configured to be bonded to a working surface 202 of a substrate 204 using an adhesive 306. The nut retainer 124 being positioned over a fastener nut 140 at a predetermined location 402 for a hole 404 through which a fastener bolt 206 is subsequently inserted from a clamping surface 208 of the substrate 204 for engagement with the fastener nut 140 retained between the nut retainer 124 and the working surface 202. In a further example, the adhesive 306 includes a BAC1010 adhesive, a type 111 adhesive, an EA 9394 adhesive, a BAC5010 adhesive, a type 106 adhesive, a type 70 adhesive, a type 117 adhesive or any other suitable adhesive in any suitable combination. In another further example, the hole 404 includes a pilot hole 406 predrilled at the predetermined location 402 in conjunction with the nut retainer 124 being bonded to the working surface 202 of the substrate 204. In yet another further example, the hole 404 includes a full-sized hole 408 predrilled at the predetermined location 402 in conjunction with the nut retainer 124 being bonded to the working surface 202 of the substrate 204.

In still another example of the nut retainer assembly 100, the sixth interior surface 1502 associated with the flange portion 110 and the nut retaining portion 132 is sized and shaped to fit over a fastener nut 140 between the nut retainer 124 and a working surface 202 of a substrate 204.

In a further example, the sixth interior surface 1502 associated with the flange portion 110 and the nut retaining portion 132 is sized and shaped to provide a first horizontal float 502 between a compressive feature 146 of the fastener nut 140 and the nut retainer 124 and a second horizontal float 503 between a torquing feature 148 of the fastener nut 140 and the nut retainer 124. In an even further example, the first horizontal float 502 includes 20 thousandths of an inch, 18 thousandths to 22 thousandths of an inch, 15 thousandths to 25 thousandths of an inch or any other suitable dimension for the first horizontal float 502. In another even further example, the second horizontal float 503 includes 9 thousandths of an inch, 7 thousandths to 11 thousandths of an inch, 5 thousandths to 13 thousandths of an inch or any other suitable dimension for the second horizontal float 503.

In another further example, the sixth interior surface 1502 associated with the flange portion 110 and an adjacent part of the nut retaining portion 132 is sized and shaped to provide a vertical float 504 between a compressive feature 146 of the fastener nut 140 and the nut retainer 124. In an even further example, the vertical float 504 includes five thousandths of an inch, four thousandths to six thousandths of an inch, three thousandths to seven thousandths of an inch or any other suitable dimension for the vertical float 504.

In yet another further example, a portion of the central opening 138 proximate the distal retainer end 128 is sized and shaped to provide a clearance fit for a torquing feature 148 of the fastener nut 140 while preventing the fastener nut 140 from turning when it is retained between the nut retainer 124 and the working surface 202 of the substrate 204. In an even further example, the portion of the central opening 138 proximate the distal retainer end 128 is sized to fit the torquing feature 148 of a 1/4 inch fastener nut, a 5/16 inch fastener nut, a 3/8 inch fastener nut, a 7/16 inch fastener nut, a 1/2 inch fastener nut, a 9/16 inch fastener nut, a 5/8 inch fastener nut, an 11/16 inch fastener nut, a 3/4 inch fastener nut, a 13/16 inch fastener nut, a 7/8 inch fastener nut, a 15/16 inch fastener nut, a one inch fastener nut or any other suitable dimension for the fastener nut 140. In another even further example, the portion of the central opening 138 proximate the distal retainer end 128 is sized to fit the torquing feature 148 of a 6 mm fastener nut, a 8 mm fastener nut, a 9 mm fastener nut, a 10 mm fastener nut, an 11 mm fastener nut, a 12 mm fastener nut, a 13 mm fastener nut, a 14 mm fastener nut, a 15 mm fastener nut, a 16 mm fastener nut, a 17 mm fastener nut, a 18 mm fastener nut, a 19 mm fastener nut, a 20 mm fastener nut or any other suitable dimension for the fastener nut 140. In yet another even further example, the portion of the central opening 138 proximate the distal retainer end 128 is shaped to fit the torquing feature 148 of a 4-point fastener nut, a 6-point fastener nut, a 12-point fastener nut or any other suitable shape for the torquing feature 148.

In still yet another example of the nut retainer assembly 100, the nut retainer 124 also includes a grip retainer extension 602 between the proximal retainer end 126 and the distal retainer end 128. In a further example, the grip retainer extension 602 enables the nut retainer assembly 100 to be used for a fastener bolt 206 with a longer grip length. In another example of the nut retainer assembly 100, the nut retainer assembly 100 also includes a grip extension washer 604 disposed within the central opening 138 at the proximal retainer end 126 between a fastener nut 140 retained within the nut retainer 124 and a substrate 204. In a further example, the grip extension washer 604 enables the nut retainer assembly 100 to be used for a fastener bolt 206 with a longer grip length.

In yet another example of the nut retainer assembly 100, the nut retainer assembly 100 also includes a nonconductive cap 702 to protect an operational environment within which the nut retainer assembly 100 is used from electromagnetic emissions and electrical sparks discharged by metal components 124 of the nut retainer assembly 100 and metal fasteners 140, 206 associated therewith. The first exterior surface 134 associated with the nut retainer 124 is configured to receive and engage with the nonconductive cap 702. In a further example, a fourth interior surface 706 associated with the nonconductive cap 702 and the first exterior surface 134 of the nut retainer 124 are threaded for engagement of the nonconductive cap 702 on the nut retainer 124. In another further example, a fourth interior surface 706 associated with the nonconductive cap 702 and the first exterior surface 134 of the nut retainer 124 are configured for twist-lock engagement.

In yet another further example, the nonconductive cap 702 is transparent to permit internal inspection after the nut retainer assembly 100 is assembled with a fastener nut 140 retained therein. In still another further example, the nonconductive cap 702 includes a transparent polymer material. In an even further example, the transparent polymer material includes a transparent nylon material, a nylon TMDT material, a nylon 6-3-T material, a trimethylhexamethylenediamine material, a dimethyl terephthalate material or any other suitable transparent polymer material in any suitable combination.

In still yet another further example, the nonconductive cap 702 includes a port 708 for receipt of a nonconductive sealant between a fourth interior surface 706 associated with the nonconductive cap 702 and the first exterior surface 134 of the nut retainer 124 after the nut retainer assembly 100 is assembled with a fastener nut 140 retained therein to enhance protection of the operational environment from electromagnetic emissions and electrical sparks discharged by metal components 124 of the nut retainer assembly 100 and metal fasteners 140, 206 associated therewith.

Referring generally to Figs. 1-18, by way of examples, the present disclosure is directed to a blind fastener system 200. Fig. 1 discloses an example of a nut retainer assembly 100. Fig. 2 discloses an example of the blind fastener system 200. Fig. 3 shows a cross-sectional side view of a portion of an example of a bond washer 102 for the nut retainer assembly 100 of Fig. 1. Fig. 4 shows a cross-sectional side view of the nut retainer assembly 100 of Fig. 1 positioned on a working surface 202 of a substrate 204 at a predetermined location 402 for a hole 404 through the substrate 204. Fig. 5 shows a cross-sectional side view of the nut retainer assembly 100 of Fig. 1 with a fastener nut 140 retained therein. Fig. 6 shows an exploded view of another example of the nut retainer assembly 100 of Fig. 1 with a grip retainer extension 602 and a grip extension washer 604. Fig. 7 shows a cross-sectional side view of the nut retainer assembly 100 of Fig. 1 with a nonconductive cap 702 and a fastener nut 140 retained therein. Fig. 8 show an exploded view of yet another example of a nut retainer assembly 100 that includes a seal washer 802.

Fig. 9 shows a cross-sectional side view of the nut retainer assembly 100 of Fig. 8 with a nonconductive cap 702 and a fastener nut 140 retained therein. Fig. 10 shows an exploded view of still another example of a nut retainer assembly 100 that includes a retention washer 1002. Fig. 11 shows a cross-sectional side view of the nut retainer assembly 100 of Fig. 10 with a nonconductive cap 702 and a fastener nut 140 retained therein. Fig. 12 shows a cross-sectional side view of portions of examples of a bond washer 102, a retention washer 1002 and a nut retainer 124 for the nut retainer assembly 100 of Fig. 10. Fig. 13 shows an exploded view of still yet another example of a nut retainer assembly 100 that includes a seal washer 802 and a retention washer 1002. Fig. 14 shows a cross-sectional side view of the nut retainer assembly 100 of Fig. 13 with a nonconductive cap 702 and a fastener nut 140 retained therein. Fig. 15 discloses another example of a nut retainer assembly 100. Fig. 16 shows a cross-sectional side view of the nut retainer assembly 100 of Fig. 15 with a fastener nut 140 retained therein. Fig. 17 shows an exploded view of another example of the nut retainer assembly 100 of Fig. 1 with a grip retainer extension 602 and a grip extension washer 604. Fig. 18 shows a cross-sectional side view of the nut retainer assembly 100 of Fig. 15 with a nonconductive cap 702 and a fastener nut 140 retained therein.

With reference again to Figs. 1-18, in one or more examples, a blind fastener system 200 includes a fastener bolt 206, a first substrate 204, a second substrate 210, a fastener nut 140 and a nut retainer assembly 100. The fastener bolt 206 includes a head portion, a shank portion and a threaded portion. The first substrate 204 includes a first through hole sized to provide a first clearance fit for the fastener bolt 206 and defines a first clamping surface 208 to receive the fastener bolt 206. The substrate 204 further defines a first working surface 202. The second substrate 210 includes a second through hole sized to provide a second clearance fit for the fastener bolt 206 and defines a second clamping surface 212 facing the first clamping surface 208. The second substrate further defines a second working surface 214 to receive the fastener bolt 206. The fastener nut 140 for placement on the first working surface 202 of the first substrate 204 over the first through bore. The fastener nut 140 includes a threaded bore 216. The nut retainer assembly 100 defines a central opening 138 sized and shaped to fit over and retain the fastener nut 140 on the first working surface 202 of the first substrate 204. The nut retainer assembly 100 includes a bonding surface 122 bordering the central opening 138. With the fastener nut 140 disposed within the central opening 138, at least a portion of the bonding surface 122 is bonded to the first working surface 202 of the first substrate 204 such that the second through hole of the second substrate 210, the first through hole of the first substrate 204 and the threaded bore 216 of the fastener nut 140 provide for insertion of the fastener bolt 206 and threaded engagement of the threaded portion of the fastener bolt 206 with the threaded bore 216 of the fastener nut 140.

In another example of the blind fastener system 200, nut retainer assembly 100 also includes a bond washer 102 and a nut retainer 124. The bond washer 102 defines a longitudinal axis 104 extending from a proximal washer end 106 to a distal washer end 108. The bond washer 102 includes a flange portion 110, a washer coupling portion 112, a first interior surface 114, a second interior surface 118 and the bonding surface 122. The flange portion 110 at the proximal washer end 106. The washer coupling portion 112 extending from the flange portion 110 to the distal washer end 108. The first interior surface 114 is associated with the flange portion 110. The first interior surface 114 defining a first aperture 116. The second interior surface 118 is associated with the washer coupling portion 112. The second interior surface 118 includes internal threads 120. The bonding surface 122 associated with the flange portion 110 at the proximal washer end 106. The nut retainer 124 defines a proximal retainer end 126 and a distal retainer end 128 along the longitudinal axis 104 and extending the longitudinal axis 104 from the distal washer end 108 to the distal retainer end 128. The nut retainer 124 includes a retainer coupling portion 130, a nut retaining portion 132, a first exterior surface 134 and a third interior surface 136. The retainer coupling portion 130 at the proximal retainer end 126. The nut retaining portion 132 extending from the retainer coupling portion 130 to the distal retainer end 128. The first exterior surface 134 associated with the retainer coupling portion 130. The third interior surface 136 is associated with the retainer coupling portion 130 and the nut retaining portion 132. The third interior surface 136 defines the central opening 138. The central opening 138 extending from the proximal retainer end 126 to the distal retainer end 128.

In a further example, the nut retainer 124 also includes a grip retainer extension 602 between the proximal retainer end 126 and the distal retainer end 128. In another further example, the nut retainer assembly 100 also includes a grip extension washer 604 disposed within the central opening 138 at the proximal retainer end 126 between the fastener nut 140 retained within the nut retainer 124 and the bond washer 102.

In yet another further example, the nut retainer assembly 100 also includes a nonconductive cap 702 to protect an operational environment within which the nut retainer assembly 100 is used from electromagnetic emissions and electrical sparks discharged by metal components 102, 124 of the nut retainer assembly 100 and metal fasteners 140, 206 associated therewith. A third exterior surface 704 associated with the washer coupling portion 112 is configured to receive and engage with the nonconductive cap 702.

In still another further example, the retainer coupling portion 130 includes external threads 150 for engagement with the internal threads 120 in the washer coupling portion 112 to retain the fastener nut 140 between the nut retainer 124 and the bond washer 102. After the retainer coupling portion 130 and the washer coupling portion 112 are fully engaged, the proximal retainer end 126 sits on the flange portion 110 of the bond washer 102 and at least a portion of a compressive feature 146 of the fastener nut 140 sits on the flange portion 110. In an even further example, the bonding surface 122 of the bond washer 102 includes a recessed area 302 along a peripheral portion 304 of the bonding surface 122 for receipt of an adhesive 306 and a contact area 308 extending from the recessed area 302 to the first aperture 116 of the flange portion 110.

In still yet another further example, the third interior surface 136 associated with the retainer coupling portion 130 defines a second aperture 506 wider than the first aperture 116 and sized to provide a clearance fit for the fastener nut 140 at the proximal retainer end 126. In this example, the nut retainer assembly 100 also includes a seal washer 802 disposed within the first aperture 116 and affixed to the first interior surface 114 associated with the flange portion 110 of the bond washer 102 after the nut retainer 124 and the bond washer 102 are assembled with the fastener nut 140 retained therein.

In another further example, the washer coupling portion 112 defines a fourth aperture 152 wider than the first aperture 116 in the flange portion 110 of the bond washer 102 thereby defining an inner portion 1102 of the flange portion 110 extending from the washer coupling portion 112 to the first aperture 116 and an outer portion 1104 extending from the washer coupling portion 112 to a fourth exterior surface 1106 associated with the flange portion 110. In an even further example, the nut retainer assembly 100 also includes a retention washer 1002 with a fifth interior surface 1004, a lip portion 1108 and a nut support portion 1110. The fifth interior surface 1004 defining a fifth aperture 1112. The lip portion 1108 having a first thickness 1202. The nut support portion 1110 having a second thickness 1204 greater than the first thickness 1202. The retention washer 1002 disposed within the fourth aperture 152 of the washer coupling portion 112 with the lip portion 1108 overlaying the inner portion 1102 of the flange portion 110 for the bond washer 102 and the nut support portion 1110 extending into the first aperture 116 of the flange portion 110.

In an even yet further example, the nut retainer assembly 100 also includes a seal washer 802 disposed within the fifth aperture 1112 of the retention washer 1002 and affixed to the fifth interior surface 1004 associated with the retention washer 1002 after the nut retainer 124, the retention washer 1002 and the bond washer 102 are assembled with the fastener nut 140 retained therein.

In yet another example of the blind fastener system 200, the nut retainer assembly 100 includes a nut retainer 124 defining a longitudinal axis 104 extending from a proximal retainer end 126 to a distal retainer end 128. The nut retainer 124 includes a flange portion 110, a nut retaining portion 132, a sixth interior surface 1502 and the bonding surface 122. The flange portion 110 at the proximal retainer end 126. The nut retaining portion 132 extending from the flange portion 110 to the distal retainer end 128. The sixth interior surface 1502 is associated with the flange portion 110 and the nut retaining portion 132. The sixth interior surface 1502 defining the central opening 138 extending from the proximal retainer end 126 to the distal retainer end 128. The bonding surface 122 associated with the flange portion 110 at the proximal retainer end 126. In a further example, the nut retainer 124 also includes a grip retainer extension 602 between the proximal retainer end 126 and the distal retainer end 128. In another further example, the nut retainer assembly 100 also includes a grip extension washer 604 disposed within the central opening 138 at the proximal retainer end 126 between the fastener nut 140 retained within the nut retainer 124 and a substrate 204. In yet another further example, the nut retainer assembly (100) also includes a nonconductive cap 702 to protect an operational environment within which the nut retainer assembly 100 is used from electromagnetic emissions and electrical sparks discharged by metal components 124 of the nut retainer assembly 100 and metal fasteners 140, 206 associated therewith. A first exterior surface 134 associated with the nut retainer 124 is configured to receive and engage with the nonconductive cap 702.

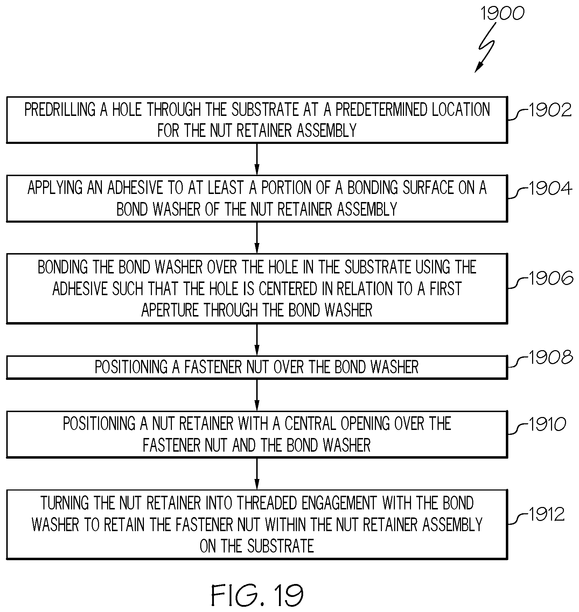

Referring generally to Figs. 1-14 and 19, by way of examples, the present disclosure is directed to a method 1900 for assembling a nut retainer assembly 100 on a substrate 204. Fig. 19 discloses the method 1900. Fig. 1 discloses an example of the nut retainer assembly 100. Fig. 2 discloses an example of a blind fastener system 200. Fig. 3 shows a cross-sectional side view of a portion of an example of a bond washer 102 for the nut retainer assembly 100 of Fig. 1. Fig. 4 shows a cross-sectional side view of the nut retainer assembly 100 of Fig. 1 positioned on a working surface 202 of a substrate 204 at a predetermined location 402 for a hole 404 through the substrate 204. Fig. 5 shows a cross-sectional side view of the nut retainer assembly 100 of Fig. 1 with a fastener nut 140 retained therein. Fig. 6 shows an exploded view of another example of the nut retainer assembly 100 of Fig. 1 with a grip retainer extension 602 and a grip extension washer 604. Fig. 7 shows a cross-sectional side view of the nut retainer assembly 100 of Fig. 1 with a nonconductive cap 702 and a fastener nut 140 retained therein.

Fig. 8 show an exploded view of yet another example of a nut retainer assembly 100 that includes a seal washer 802. Fig. 9 shows a cross-sectional side view of the nut retainer assembly 100 of Fig. 8 with a nonconductive cap 702 and a fastener nut 140 retained therein. Fig. 10 shows an exploded view of still another example of a nut retainer assembly 100 that includes a retention washer 1002. Fig. 11 shows a cross-sectional side view of the nut retainer assembly 100 of Fig. 10 with a nonconductive cap 702 and a fastener nut 140 retained therein. Fig. 12 shows a cross-sectional side view of portions of examples of a bond washer 102, a retention washer 1002 and a nut retainer 124 for the nut retainer assembly 100 of Fig. 10. Fig. 13 shows an exploded view of still yet another example of a nut retainer assembly 100 that includes a seal washer 802 and a retention washer 1002. Fig. 14 shows a cross-sectional side view of the nut retainer assembly 100 of Fig. 13 with a nonconductive cap 702 and a fastener nut 140 retained therein.

With reference again to Figs. 1-14 and 19, in one or more examples, a method 1900 (see Fig. 19) for assembling a nut retainer assembly 100 on a substrate 204 includes predrilling 1902 a hole 404 through the substrate 204 at a predetermined location 402 for the nut retainer assembly 100. At 1904, an adhesive 306 is applied to at least a portion of a bonding surface 122 on a bond washer 102 of the nut retainer assembly 100. At 1908, the bond washer 102 is bonded over the hole 404 in the substrate 204 using the adhesive 306 such that the hole 404 is centered in relation to a first aperture 116 through the bond washer 102. At 1908, a fastener nut 140 is positioned over the bond washer 102. At 1910, a nut retainer 124 with a central opening 138 is positioned over the fastener nut 140 and the bond washer 102. The nut retainer 124 having external threads 150 for engagement with internal threads 120 of the bond washer 102. The central opening 138 provides a clearance fit for the fastener nut 140. At 1912, the nut retainer 124 is turned into threaded engagement with the bond washer 102 to retain the fastener nut 140 within the nut retainer assembly 100 on the substrate 204.

In another example of the method 1900, the hole 404 through the substrate 204 includes a pilot hole 406 for subsequent drilling of a full-sized hole 408 that provides a clearance fit to a fastener bolt 206 associated with the fastener nut 140 retained by the nut retainer assembly 100. In yet another example of the method 1900, the hole 404 through the substrate 204 includes a full-sized hole 408 that provides a clearance fit to a fastener bolt 206 associated with the fastener nut 140 retained by the nut retainer assembly 100. In still another example of the method 1900, the central opening 138 of the nut retainer 124 is sized and shaped to provide a first horizontal float 502 between a compressive feature 146 of the fastener nut 140 and the nut retainer 124 and a second horizontal float 503 between a torquing feature 148 of the fastener nut 140 and the nut retainer 124. In still yet another example of the method 1900, the central opening 138 of the nut retainer 124 is sized and shaped to provide a vertical float 504 between a compressive feature 146 of the fastener nut 140 and the nut retainer 124. In another example of the method 1900, a portion of the central opening 138 proximate a distal retainer end 128 is sized and shaped to provide a clearance fit for a torquing feature 148 of the fastener nut 140 while preventing the fastener nut 140 from turning when it is retained between the nut retainer 124 and the bond washer 102.

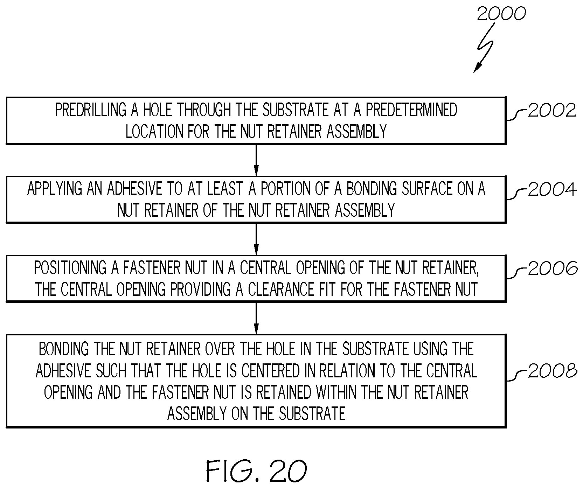

Referring generally to Figs. 15-18 and 20, by way of examples, the present disclosure is directed to a method 2000 for assembling a nut retainer assembly 100 on a substrate 204. Fig. 20 discloses the method 2000. Fig. 15 discloses an example of the nut retainer assembly 100. Fig. 16 shows a cross-sectional side view of the nut retainer assembly 100 of Fig. 15 with a fastener nut 140 retained therein. Fig. 17 shows an exploded view of another example of the nut retainer assembly 100 of Fig. 1 with a grip retainer extension 602 and a grip extension washer 604. Fig. 18 shows a cross-sectional side view of the nut retainer assembly 100 of Fig. 15 with a nonconductive cap 702 and a fastener nut 140 retained therein.

With reference again to Figs. 15-18 and 20, in one or more examples, a method 2000 (see Fig. 20) for assembling a nut retainer assembly 100 on a substrate 204 includes predrilling 2002 a hole 404 through the substrate 204 at a predetermined location 402 for the nut retainer assembly 100. At 2004, an adhesive 306 is applied to at least a portion of a bonding surface 122 on a nut retainer 124 of the nut retainer assembly 100. At 2006, a fastener nut 140 is positioned in a central opening 138 of the nut retainer 124. The central opening 138 provides a clearance fit for the fastener nut 140. At 2008, the nut retainer 124 is bonded over the hole 404 in the substrate 204 using the adhesive 306 such that the hole 404 is centered in relation to the central opening 138 and the fastener nut 140 is retained within the nut retainer assembly 100 on the substrate 204.

In another example of the method 2000, the hole 404 through the substrate 204 includes a pilot hole 406 for subsequent drilling of a full-sized hole 408 that provides a clearance fit to a fastener bolt 206 associated with the fastener nut 140 retained by the nut retainer assembly 100.

In yet another example of the method 2000, the hole 404 through the substrate 204 includes a full-sized hole 408 that provides a clearance fit to a fastener bolt 206 associated with the fastener nut 140 retained by the nut retainer assembly 100.

In still another example of the method 2000, the central opening 138 of the nut retainer 124 is sized and shaped to provide a first horizontal float 502 between a compressive feature 146 of the fastener nut 140 and the nut retainer 124 and a second horizontal float 503 between a torquing feature 148 of the fastener nut 140 and the nut retainer 124.

In still yet another example of the method 2000, the central opening 138 of the nut retainer 124 is sized and shaped to provide a vertical float 504 between a compressive feature 146 of the fastener nut 140 and the nut retainer 124.

In another example of the method 2000, a portion of the central opening 138 proximate a distal retainer end 128 is sized and shaped to provide a clearance fit for a torquing feature 148 of the fastener nut 140 while preventing the fastener nut 140 from turning when it is retained between the nut retainer 124 and the substrate 204.

Examples of nut retainer assemblies 100, blind fastener systems 200 and methods 1900, 2000 for assembling a nut retainer assembly 100 on a substrate 204 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-18, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1-18, referred to above, need be included in every example and not all elements, features and/or components described herein are necessarily depicted in each illustrative example. Accordingly, some of the elements, features and/or components described and illustrated in Figs. 1-18 may be combined in various ways without the need to include other features described and illustrated in Figs. 1-18, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1-18, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1-18 and such elements, features and/or components may not be discussed in detail herein with reference to each of Figs. 1-18, Similarly, all elements, features and/or components may not be labeled in each of Figs. 1-18, but reference numerals associated therewith may be utilized herein for consistency.

In Figs. 19 and 20, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 19 and 20 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

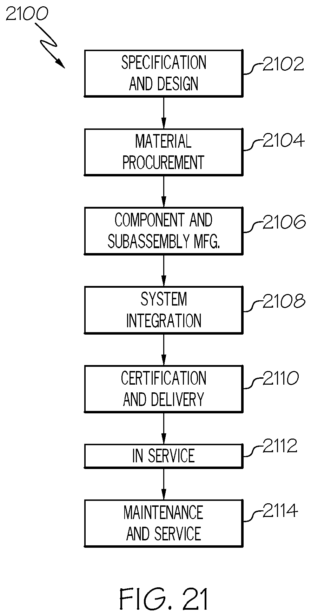

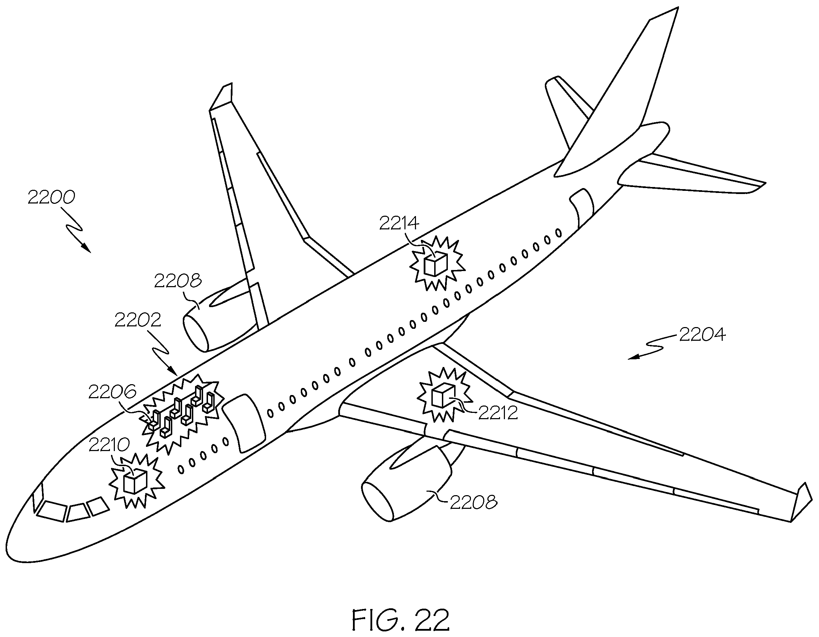

Examples of the subject matter disclosed herein may be described in the context of aircraft manufacturing and service method 2100 as shown in Fig. 21 and aircraft 2200 as shown in Fig. 22. In one or more examples, the disclosed methods and systems for associating test data for a part under test with an end item coordinate system may be used in aircraft manufacturing. During pre-production, the service method 2100 may include specification and design (block 2102) of aircraft 2200 and material procurement (block 2104). During production, component and subassembly manufacturing (block 2106) and system integration (block 2108) of aircraft 2200 may take place. Thereafter, aircraft 2200 may go through certification and delivery (block 2110) to be placed in service (block 2112). While in service, aircraft 2200 may be scheduled for routine maintenance and service (block 2114). Routine maintenance and service may include modification, reconfiguration, refurbishment, etc. of one or more systems of aircraft 2200.

Each of the processes of the service method 2100 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 22, aircraft 2200 produced by the service method 2100 may include airframe 2202 with a plurality of high-level systems 2204 and interior 2206. Examples of high-level systems 2204 include one or more of propulsion system 2208, electrical system 2210, hydraulic system 2212 and environmental system 2214. Any number of other systems may be included. Although an aerospace example is shown, the principles disclosed herein may be applied to other industries, such as the automotive industry. Accordingly, in addition to aircraft 2200, the principles disclosed herein may apply to other vehicles, e.g., land vehicles, marine vehicles, space vehicles, etc.

The disclosed systems and methods for associating test data for a part under test with an end item coordinate system may be employed during any one or more of the stages of the manufacturing and service method 2100. For example, components or subassemblies corresponding to component and subassembly manufacturing (block 2106) may be fabricated or manufactured in a manner similar to components or subassemblies produced while aircraft 2200 is in service (block 2112). Also, one or more examples of the system(s), method(s), or combination thereof may be utilized during production stages (block 2106 and block 2108), for example, by substantially expediting assembly of or reducing the cost of aircraft 2200. Similarly, one or more examples of the system or method realizations, or a combination thereof, may be utilized, for example and without limitation, while aircraft 2200 is in service (block 2112) and/or during maintenance and service (block 2114).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the nut retainer assembly 100, blind fastener system 200 and methods 1900, 2000 for assembling a nut retainer assembly 100 on a substrate 204 have been shown and described, modifications may occur to those skilled in the art upon reading the specification. The present application includes such modifications and is limited only by the scope of the claims.

## Claims

1. A nut retainer assembly (100) for a blind fastener system (200), the nut retainer assembly (100) comprising:
a bond washer (102) defining a longitudinal axis (104) extending from a proximal washer end (106) to a distal washer end (108), the bond washer (102) comprising
i) a flange portion (110) at the proximal washer end (106),
ii) a washer coupling portion (112) extending from the flange portion (110) to the distal washer end (108),
iii) a first interior surface (114) associated with the flange portion (110), the flange portion (110) comprising a first aperture (116) defined by the first interior surface (114), whereby the first aperture (116) is configured to provide a clearance fit for a fastener bolt (206) ,
iv) a second interior surface (118) associated with the washer coupling portion (112), the second interior surface (118) comprising internal threads (120) and
v) a bonding surface (122) associated with the flange portion (110) at the proximal washer end (106);
a fastener nut (140) comprising a compressive feature (146) and a torquing feature (148); and
a nut retaining element (124) defining a proximal retainer end (126) and a distal retainer end (128) along the longitudinal axis (104) and extending the longitudinal axis (104) from the distal washer end (108) to the distal retainer end (128), the nut retaining element (124) comprising
a) a retainer coupling portion (130) at the proximal retainer end (126), the retainer coupling portion (130) being threaded for engagement with the internal threads (120) of the second interior surface (118) of the bond washer (102);
b) a nut retaining portion (132) extending from the retainer coupling portion (130) to the distal retainer end (128),
c) a first exterior surface (134) associated with the retainer coupling portion (130) and
d) a third interior surface (136) associated with the retainer coupling portion (130) and the nut retaining portion (132), the third interior surface (136) defining a central opening (138) extending from the proximal retainer end (126) to the distal retainer end (128);
wherein the third interior surface (136) is sized and shaped to provide:
(i) a first horizontal float (502) between the compressive feature (146) of the fastener nut (140) and the nut retaining element (124);
(ii) a second horizontal float (503) between the torquing feature (148) of the fastener nut (140) and the nut retaining element (124); and
(iii) a vertical float (504) between the compressive feature of the fastener nut (140) and the nut retaining element (124).

2. The nut retainer assembly of Claim 1 wherein the bond washer (102) is configured to be bonded to a working surface (202) of a substrate (204) using an adhesive (306), the bond washer (102) being positioned over a predetermined location (402) for a hole (404) through which a fastener bolt (206) is subsequently inserted from a clamping surface (208) of the substrate (204) for engagement with a fastener nut (140) retained by the nut retainer assembly (100).

3. The nut retainer assembly of any one of the preceding Claims, wherein the third interior surface (136) associated with the retainer coupling portion (130) and the nut retaining portion (132) is sized and shaped to fit over a fastener nut (140) between the nut retaining element (124) and the bond washer (102), and
wherein the first exterior surface (134) associated with the retainer coupling portion (130) is threaded for engagement with the internal threads (120) in the washer coupling portion (112) to retain the fastener nut (140) between the nut retaining element (124) and the bond washer (102).

4. The nut retainer assembly of Claim 3 wherein a portion of the central opening (138) proximate the distal retainer end (128) is sized and shaped to provide a clearance fit for a torquing feature (148) of the fastener nut (140) while preventing the fastener nut (140) from turning when it is retained between the nut retaining element (124) and the bond washer (102).

5. The nut retainer assembly of Claim 4 wherein the portion of the central opening (138) proximate the distal retainer end (128) is shaped to fit the torquing feature (148) of at least one of a 4-point fastener nut, a 6-point fastener nut and a 12-point fastener nut.

6. The nut retainer assembly of Claim 1, the nut retaining element (124) further comprising:
a grip retainer extension (602) between the proximal retainer end (126) and the distal retainer end (128).

7. The nut retainer assembly of any one of the preceding Claims, further comprising:
a grip extension washer (604) disposed within the central opening (138) at the proximal retainer end (126) between a fastener nut (140) retained within the nut retaining element (124) and the bond washer (102).

8. The nut retainer assembly of any one of the preceding Claims, further comprising:
a nonconductive cap (702) to protect an operational environment within which the nut retainer assembly (100) is used from electromagnetic emissions and electrical sparks discharged by metal components (102, 124) of the nut retainer assembly (100) and metal fasteners (140, 206) associated therewith, and
wherein a third exterior surface (704) associated with the washer coupling portion (112) is configured to receive and engage with the nonconductive cap (702).

9. The nut retainer assembly of Claim 1, the retainer coupling portion (130) comprising external threads (150) for engagement with the internal threads (120) in the washer coupling portion (112) to retain the fastener nut (140) between the nut retaining element (124) and the bond washer (102), and
wherein, after the retainer coupling portion (130) and the washer coupling portion (112) are fully engaged, the proximal retainer end (126) sits on the flange portion (110) of the bond washer (102) and at least a portion of the compressive feature (146) of the fastener nut (140) sits on the flange portion (110).

10. The nut retainer assembly of Claim 9, the bonding surface (122) of the bond washer (102) comprising:
a recessed area (302) along a peripheral portion (304) of the bonding surface (122) for receipt of an adhesive (306); and
a contact area (308) extending from the recessed area (302) to the first aperture (116) of the flange portion (110).

11. The nut retainer assembly of Claim 9 wherein the third interior surface (136) associated with the retainer coupling portion (130) defines a second aperture (506) wider than the first aperture (116) and sized to provide a clearance fit for the fastener nut (140) at the proximal retainer end (126), the nut retainer assembly (100) further comprising:
a seal washer (802) disposed within the first aperture (116) and affixed to the first interior surface (114) associated with the flange portion (110) of the bond washer (102) after the nut retaining element (124) and the bond washer (102) are assembled with a fastener nut (140) retained therein.

12. The nut retainer assembly of Claim 1 wherein the washer coupling portion (112) defines a fourth aperture (152) wider than the first aperture (116) in the flange portion (110) of the bond washer (102) thereby defining an inner portion (1102) of the flange portion (110) extending from the washer coupling portion (112) to the first aperture (116) and an outer portion (1104) extending from the washer coupling portion (112) to a fourth exterior surface (1106) associated with the flange portion (110).

13. The nut retainer assembly of Claim 12, further comprising:
a retention washer (1002) comprising a fifth interior surface (1004), a lip portion (1108) and a nut support portion (1110), the fifth interior surface (1004) defining a fifth aperture (1112), the lip portion (1108) having a first thickness (1202), the nut support portion (1110) having a second thickness (1204) greater than the first thickness (1202), the retention washer (1002) disposed within the fourth aperture (152) of the washer coupling portion (112) with the lip portion (1108) overlaying the inner portion (1102) of the flange portion (110) for the bond washer (102) and the nut support portion (1110) extending into the first aperture (116) of the flange portion (110).

14. The nut retainer assembly of Claim 13 wherein the third interior surface (136) associated with the retainer coupling portion (130) and the nut retaining portion (132) of the nut retaining element (124) is sized and shaped to fit over the fastener nut (140) between the nut retaining element (124) and the retention washer (1002).

15. The nut retainer assembly of claim 8, wherein the nonconductive cap (702) is transparent to permit internal inspection after the nut retainer assembly is assembled with a fastener nut (140) retained therein.

## Patentansprüche

1. Mutternhalteanordnung (100) für ein Blindbefestigungssystem (200), aufweisend:
eine Verbindungsscheibe (102), die eine Längsachse (104) definiert, die sich von einem proximalen Scheibenende (106) zu einem distalen Scheibenende (108) erstreckt, wobei die Verbindungsscheibe (102)
i) einen Flanschabschnitt (110) an dem proximalen Scheibenende (106),
ii) einen Scheibenkopplungsabschnitt (112), der sich von dem Flanschabschnitt (110) zu dem distalen Scheibenende (108) erstreckt,
iii) eine erste Innenfläche (114), die dem Flanschabschnitt (110) zugeordnet ist, wobei der Flanschabschnitt (110) eine erste Öffnung (116) aufweist, die durch die erste Innenfläche (114) definiert ist, wobei die erste Öffnung (116) dazu ausgelegt ist, eine Spielpassung für einen Befestigungsbolzen (206) bereitzustellen,
iv) eine zweite Innenfläche (118), die dem Scheibenkopplungsabschnitt (112) zugeordnet ist, wobei die zweite Innenfläche (118) Innengewinde (120) aufweist, und
v) eine Verbindungsfläche (122), die dem Flanschabschnitt (110) an dem proximalen Scheibenende (106) zugeordnet ist,
aufweist;
eine Befestigungsmutter (140), die ein Kompressionsmerkmal (146) und ein Drehmomentübertragungsmerkmal (148) aufweist; und
ein Mutternhalteelement (124), das ein proximales Halterende (126) und ein distales Halterende (128) entlang der Längsachse (104) definiert und die Längsachse (104) von dem distalen Scheibenende (108) zu dem distalen Halterende (128) verlängert, wobei das Mutternhalteelement (124)
a) einen Halterkopplungsabschnitt (130) an dem proximalen Halterende (126) aufweist, wobei der Halterkopplungsabschnitt (130) mit einem Gewinde versehen ist, um mit den Innengewinden (120) der zweiten Innenfläche (118) der Verbindungsscheibe (102) in Eingriff zu gelangen,
b) einen Mutternhalteabschnitt (132), der sich von dem Halterkopplungsabschnitt (130) zu dem distalen Halterende (128) erstreckt,
c) eine erste Außenfläche (134), die dem Halterkopplungsabschnitt (130) zugeordnet ist, und
d) eine dritte Innenfläche (136), die dem Halterkopplungsabschnitt (130) und dem Mutternhalteabschnitt (132) zugeordnet ist, wobei die dritte Innenfläche (136) eine zentrale Öffnung (138) definiert, die sich von dem proximalen Halterende (126) zu dem distalen Halterende (128) erstreckt,
aufweist;
wobei die dritte Innenfläche (136) so dimensioniert und geformt ist, dass sie
(i) ein erstes horizontales Spiel (502) zwischen dem Kompressionsmerkmal (146) der Befestigungsmutter (140) und dem Mutternhalteelement (124),
(ii) ein zweites horizontales Spiel (503) zwischen dem Drehmomentübertragungsmerkmal (148) der Befestigungsmutter (140) und dem Mutternhalteelement (124), und
(iii) ein vertikales Spiel (504) zwischen dem Kompressionsmerkmal der Befestigungsmutter (140) und dem Mutternhalteelement (124)
bereitstellt.

2. Mutternhalteanordnung nach Anspruch 1, wobei die Verbindungsscheibe (102) dazu ausgelegt ist, unter Verwendung eines Klebstoffs (306) mit einer Arbeitsfläche (202) eines Substrats (204) verbunden zu werden, wobei die Verbindungsscheibe (102) über einer vorbestimmten Position (402) für ein Loch (404) positioniert ist, durch das anschließend ein Befestigungsbolzen (206) von einer Klemmfläche (208) des Substrats (204) aus zum Eingriff mit einer von der Mutternhalteanordnung (100) gehaltenen Befestigungsmutter (140) eingeführt wird.

3. Mutternhalteanordnung nach einem der vorhergehenden Ansprüche, wobei die dritte Innenfläche (136), die dem Halterkopplungsabschnitt (130) und dem Mutternhalteabschnitt (132) zugeordnet ist, so dimensioniert und geformt ist, dass sie über eine Befestigungsmutter (140) zwischen dem Mutternhalteelement (124) und der Verbindungsscheibe (102) passt, und
wobei die erste Außenfläche (134), die dem Halterkopplungsabschnitt (130) zugeordnet ist, mit einem Gewinde versehen ist, um mit den Innengewinden (120) in dem Scheibenkopplungsabschnitt (112) in Eingriff zu gelangen, um die Befestigungsmutter (140) zwischen dem Mutternhalteelement (124) und der Verbindungsscheibe (102) zu halten.

4. Mutternhalteanordnung nach Anspruch 3, wobei ein Abschnitt der zentralen Öffnung (138) nahe dem distalen Halterende (128) so dimensioniert und geformt ist, dass er eine Spielpassung für ein Drehmomentübertragungsmerkmal (148) der Befestigungsmutter (140) bereitstellt und gleichzeitig verhindert, dass sich die Befestigungsmutter (140) dreht, wenn sie zwischen dem Mutternhalteelement (124) und der Verbindungsscheibe (102) gehalten ist.

5. Mutternhalteanordnung nach Anspruch 4, wobei der Abschnitt der zentralen Öffnung (138) nahe dem distalen Halterende (128) so geformt ist, dass er zu dem Drehmomentübertragungsmerkmal (148) von mindestens einer Vierpunkt-Befestigungsmutter, einer Sechspunkt-Befestigungsmutter und einer Zwölfpunkt-Befestigungsmutter passt.

6. Mutternhalteanordnung nach Anspruch 1, wobei das Mutternhalteelement (124) des Weiteren aufweist:
eine Greifhalterverlängerung (602) zwischen dem proximalen Halterende (126) und dem distalen Halterende (128).

7. Mutternhalteanordnung nach einem der vorhergehenden Ansprüche, des Weiteren aufweisend
eine Greifverlängerungsscheibe (604), die innerhalb der zentralen Öffnung (138) an dem proximalen Halterende (126) zwischen einer innerhalb des Mutternhalteelements (124) gehaltenen Befestigungsmutter (140) und der Verbindungsscheibe (102) angeordnet ist.

8. Mutternhalteanordnung nach einem der vorhergehenden Ansprüche, des Weiteren aufweisend:
eine nichtleitende Kappe (702), um eine Betriebsumgebung, in der die Mutternhalteanordnung (100) verwendet wird, vor elektromagnetischen Emissionen und elektrischen Funken zu schützen, die von Metallkomponenten (102, 124) der Mutternhalteanordnung (100) und damit verbundenen Metallbefestigungselementen (140, 206) abgegeben werden, und
wobei eine dritte Außenfläche (704), die dem Scheibenkopplungsabschnitt (112) zugeordnet ist, dazu ausgelegt ist, die nichtleitende Kappe (702) aufzunehmen und mit dieser in Eingriff zu gelangen.

9. Mutternhalteanordnung nach Anspruch 1, wobei der Halterkopplungsabschnitt (130) Außengewinde (150) aufweist, um mit den Innengewinden (120) in dem Scheibenkopplungsabschnitt (112) in Eingriff zu gelangen, um die Befestigungsmutter (140) zwischen dem Mutternhalteelement (124) und der Verbindungsscheibe (102) zu halten, und
wobei, nachdem der Halterkopplungsabschnitt (130) und der Scheibenkopplungsabschnitt (112) vollständig in Eingriff gelangt sind, das proximale Halterende (126) auf dem Flanschabschnitt (110) der Verbindungsscheibe (102) aufliegt und zumindest ein Abschnitt des Kompressionsmerkmals (146) der Befestigungsmutter (140) auf dem Flanschabschnitt (110) der Verbindungsscheibe (102) aufliegt.

10. Mutternhalteanordnung nach Anspruch 9, wobei die Verbindungsfläche (122) der Verbindungsscheibe (102) aufweist
einen vertieften Bereich (302) entlang eines Umfangsabschnitts (304) der Verbindungsfläche (122) zur Aufnahme eines Klebstoffs (306), und
einen Kontaktbereich (308), der sich von dem vertieften Bereich (302) zu der ersten Öffnung (116) des Flanschabschnitts (110) erstreckt.

11. Mutternhalteanordnung nach Anspruch 9, wobei die dritte Innenfläche (136), die dem Halterkopplungsabschnitt (130) zugeordnet ist, eine zweite Öffnung (506) definiert, die breiter als die erste Öffnung (116) ist und so dimensioniert ist, dass sie an dem proximalen Halterende (126) eine Spielpassung für die Befestigungsmutter (140) bereitstellt, wobei die Mutternhalteanordnung (100) des Weiteren aufweist:
eine Dichtungsscheibe (802), die innerhalb der ersten Öffnung (116) angeordnet und nach dem Zusammenbau des Mutternhalteelements (124) und der Verbindungsscheibe (102) mit einer darin gehaltenen Befestigungsmutter (140) an der ersten Innenfläche (114) befestigt ist, die dem Flanschabschnitt (110) der Verbindungsscheibe (102) zugeordnet ist.

12. Mutternhalteanordnung nach Anspruch 1, wobei der Scheibenkopplungsabschnitt (112) eine vierte Öffnung (152) definiert, die breiter als die erste Öffnung (116) in dem Flanschabschnitt (110) der Verbindungsscheibe (102) ist, wodurch ein innerer Abschnitt (1102) des Flanschabschnitts (110), der sich von dem Scheibenkopplungsabschnitt (112) zu der ersten Öffnung (116) erstreckt, und ein äußerer Abschnitt (1104), der sich von dem Scheibenkopplungsabschnitt (112) zu einer vierten Außenfläche (1106) erstreckt, die dem Flanschabschnitt (110) zugeordnet ist, definiert werden.

13. Mutternhalteanordnung nach Anspruch 12, des Weiteren aufweisend:
eine Haltescheibe (1002), die eine fünfte Innenfläche (1004), einen Lippenabschnitt (1108) und einen Mutternstützabschnitt (1110) aufweist, wobei die fünfte Innenfläche (1004) eine fünfte Öffnung (1112) definiert, wobei der Lippenabschnitt (1108) eine erste Dicke (1202) aufweist, wobei der Mutternstützabschnitt (1110) eine zweite Dicke (1204) aufweist, die größer als die erste Dicke (1202) ist, wobei die Haltescheibe (1002) innerhalb der vierten Öffnung (152) des Scheibenkopplungsabschnitts (112) angeordnet ist, wobei der Lippenabschnitt (1108) den inneren Abschnitt (1102) des Flanschabschnitts (110) der Verbindungsscheibe (102) überdeckt und der Mutternstützabschnitt (1110) sich in die erste Öffnung (116) des Flanschabschnitts (110) erstreckt.

14. Mutternhalteanordnung nach Anspruch 13, wobei die dritte Innenfläche (136), die dem Halterkopplungsabschnitt (130) und dem Mutternhalteabschnitt (132) des Mutternhalteelements (124) zugeordnet ist, so dimensioniert und geformt ist, dass sie über die Befestigungsmutter (140) zwischen dem Mutternhalteelement (124) und der Haltescheibe (1002) passt.

15. Mutternhalteanordnung nach Anspruch 8, wobei die nichtleitende Kappe (702) transparent ist, um eine Inneninspektion zu ermöglichen, nachdem die Mutternhalteanordnung mit einer darin gehaltenen Befestigungsmutter (140) zusammengebaut worden ist.

## Revendications

1. Ensemble formant élément de retenue d'écrou (100) pour un système d'élément de fixation borgne (200), l'ensemble formant élément de retenue d'écrou (100) comprenant:
une rondelle de liaison (102) définissant un axe longitudinal (104) s'étendant d'une extrémité proximale de rondelle (106) à une extrémité distale de rondelle (108), la rondelle de liaison (102) comprenant
i) une partie collerette (110) au niveau de l'extrémité proximale de rondelle (106),
ii) une partie de couplage de rondelle (112) s'étendant de la partie collerette (110) jusqu'à l'extrémité distale de rondelle (108),
iii) une première surface intérieure (114) associée à la partie collerette (110), la partie collerette (110) comprenant une première ouverture (116) définie par la première surface intérieure (114), où la première ouverture (116) est configurée pour permettre un ajustement avec jeu pour un boulon de fixation (206),
iv) une seconde surface intérieure (118) associée à la partie de couplage de rondelle (112), la seconde surface intérieure (118) comprenant un filetage interne (120) et
v) une surface de liaison (122) associée à la partie collerette (110) au niveau de l'extrémité proximale de rondelle (106);
un écrou d'élément de fixation (140) comprenant un élément de compression (146) et un élément d'application de couple (148); et
un élément de retenue d'écrou (124) définissant une extrémité proximale d'élément de retenue (126) et une extrémité distale d'élément de retenue (128) le long de l'axe longitudinal (104) et étendant l'axe longitudinal (104) depuis l'extrémité distale de rondelle (108) jusqu'à l'extrémité distale d'élément de retenue (128), l'élément de retenue d'écrou (124) comprenant
a) une partie de couplage d'élément de retenue (130) au niveau de l'extrémité proximale d'élément de retenue (126), la partie de couplage d'élément de retenue (130) étant filetée pour venir en prise avec le filetage interne (120) de la seconde surface intérieure (118) de la rondelle de liaison (102);
b) une partie de retenue d'écrou (132) s'étendant depuis la partie de couplage d'élément de retenue (130) jusqu'à l'extrémité distale d'élément de retenue (128),
c) une première surface extérieure (134) associée à la partie de couplage d'élément de retenue (130) et
d) une troisième surface intérieure (136) associée à la partie de couplage d'élément de retenue (130) et à la partie de retenue d'écrou (132), la troisième surface intérieure (136) définissant une ouverture centrale (138) s'étendant de l'extrémité proximale d'élément de retenue (126) à l'extrémité distale d'élément de retenue (128);
dans laquelle la troisième surface intérieure (136) est dimensionnée et configurée pour permettre:
(i) un premier jeu horizontal (502) entre l'élément de compression (146) de l'écrou d'élément de fixation (140) et l'élément de retenue d'écrou (124);
(ii) un second jeu horizontal (503) entre l'élément d'application de couple (148) de l'écrou d'élément de fixation (140) et l'élément de retenue d'écrou (124); et
(iii) un jeu vertical (504) entre l'élément de compression de l'écrou d'élément de fixation (140) et l'élément de retenue d'écrou (124).

2. Ensemble formant élément de retenue d'écrou selon la revendication 1, dans lequel la rondelle de liaison (102) est configurée pour être liée à une surface de travail (202) d'un substrat (204) au moyen d'un adhésif (306), la rondelle de liaison (102) étant positionnée sur un emplacement prédéterminé (402) pour un trou (404) à travers lequel un boulon d'élément de fixation (206) est ensuite inséré depuis une surface de serrage (208) du substrat (204) pour venir en prise avec un écrou d'élément de fixation (140) retenu par l'ensemble formant élément de retenue d'écrou (100).

3. Ensemble formant élément de retenue d'écrou selon l'une quelconque des revendications précédentes, dans lequel la troisième surface intérieure (136) associée à la partie de couplage d'élément de retenue (130) et à la partie de retenue d'écrou (132) est dimensionnée et configurée pour s'ajuster autour d'un écrou d'élément de fixation (140) entre l'élément de retenue d'écrou (124) et la rondelle de liaison (102), et
dans lequel la première surface extérieure (134) associée à la partie de couplage d'élément de retenue (130) est filetée pour venir en prise avec le filetage interne (120) dans la partie de couplage de rondelle (112) pour retenir l'écrou d'élément de fixation (140) entre l'élément de retenue d'écrou (124) et la rondelle de liaison (102).

4. Ensemble formant élément de retenue d'écrou selon la revendication 3, dans lequel une partie de l'ouverture centrale (138) à proximité de l'extrémité distale d'élément de retenue (128) est dimensionnée et configurée pour permettre un ajustement avec jeu pour un élément d'application de couple (148) de l'écrou d'élément de fixation (140) tout en empêchant l'écrou d'élément de fixation (140) de tourner lorsqu'il est retenu entre l'élément de retenue d'écrou et la rondelle de liaison (102).

5. Ensemble formant élément de retenue d'écrou selon la revendication 4, dans lequel la partie de l'ouverture centrale (138) proche de l'extrémité distale d'élément de retenue (128) est profilée pour s'adapter à l'élément d'application de couple (148) d'au moins l'un d'un écrou d'élément de fixation à 4 pans, d'un écrou d'élément de fixation à 6 pans ou d'un écrou d'élément de fixation à 12 pans.

6. Ensemble formant élément de retenue d'écrou selon la revendication 1, l'élément de retenue d'écrou (124) comprenant en outre:
une extension d'élément de retenue de prise (602) entre l'extrémité proximale d'élément de retenue (126) et l'extrémité distale d'élément de retenue (128).

7. Ensemble formant élément de retenue d'écrou selon l'une quelconque des revendications précédentes, comprenant en outre:
une rondelle d'extension de prise (604) disposée dans l'ouverture centrale (138) à l'extrémité proximale d'élément de retenue (126) entre un écrou d'élément de fixation (140) retenu dans l'élément de retenue d'écrou (124) et la rondelle de liaison (102).

8. Ensemble formant élément de retenue d'écrou selon l'une quelconque des revendications précédentes, comprenant en outre:
un capuchon non conducteur (702) pour protéger un environnement de fonctionnement dans lequel l'ensemble formant élément de retenue d'écrou (100) est utilisé contre les émissions électromagnétiques et les étincelles électriques produites par les composants métalliques (102, 124) de l'ensemble formant élément de retenue d'écrou (100) et les éléments de fixation métalliques (140, 206) qui sont associés, et
dans lequel une troisième surface extérieure (704) associée à la partie de couplage de rondelle (112) est configurée pour recevoir et venir en prise avec le capuchon non conducteur (702).

9. Ensemble formant élément de retenue d'écrou selon la revendication 1, la partie de couplage d'élément de retenue (130) comprenant un filetage externe (150) pour venir en prise avec le filetage interne (120) dans la partie de couplage de rondelle (112) pour retenir l'écrou d'élément de fixation (140) entre l'élément de retenue d'écrou (124) et la rondelle de liaison (102), et
dans lequel, après que la partie de couplage d'élément de retenue (130) et la partie de couplage de rondelle (112) sont totalement en prise, l'extrémité proximale d'élément de retenue (126) repose sur la partie collerette (110) de la rondelle de liaison (102) et au moins une partie de l'élément de compression (146) de l'écrou d'élément de fixation (140) repose sur la partie collerette (110).

10. Ensemble formant élément de retenue d'écrou selon la revendication 9, la surface de liaison (122) de la rondelle de liaison (102) comprenant:
une zone en retrait (302) le long d'une partie périphérique (304) de la surface de liaison (122) pour recevoir un adhésif (306); et
une zone de contact (308) s'étendant depuis la zone en retrait (302) jusqu'à la première ouverture (116) de la partie collerette (110).

11. Ensemble formant élément de retenue d'écrou selon la revendication 9 dans lequel la troisième surface intérieure (136) associée à la partie de couplage d'élément de retenue (130) définit une seconde ouverture (506) plus large que la première ouverture (116) et dimensionnée pour permettre un ajustement avec jeu pour l'écrou d'élément de fixation (140) au niveau de l'extrémité proximale d'élément de retenue (126), l'ensemble formant élément de retenue d'écrou (100) comprenant en outre:
une rondelle d'étanchéité (802) disposée à l'intérieur de la première ouverture (116) et fixée à la première surface intérieure (114) associée à la partie collerette (110) de la rondelle de liaison (102) après que l'élément de retenue d'écrou (124) et la rondelle de liaison (102) ont été assemblés avec un écrou d'élément de fixation (140) retenu à l'intérieur.

12. Ensemble formant élément de retenue d'écrou selon la revendication 1, dans lequel la partie de couplage de rondelle (112) définit une quatrième ouverture (152) plus large que la première ouverture (116) dans la partie collerette (110) de la rondelle de liaison (102), définissant ainsi une partie interne (1102) de la partie collerette (110) s'étendant de la partie de couplage de rondelle (112) jusqu'à la première ouverture (116) et une partie externe (1104) s'étendant de la partie de couplage de rondelle (112) jusqu'à une quatrième surface extérieure (1106) associée à la partie collerette (110).

13. Ensemble formant élément de retenue d'écrou selon la revendication 12, comprenant en outre:
une rondelle de rétention (1002) comprenant une cinquième surface intérieure (1004), une partie formant lèvre (1108) et une partie de support d'écrou (1110), la cinquième surface intérieure (1004) définissant une cinquième ouverture (1112), la partie formant lèvre (1108) ayant une première épaisseur (1202), la partie de support d'écrou (1110) ayant une seconde épaisseur (1204) supérieure à la première épaisseur (1202), la rondelle de rétention (1002) disposée à l'intérieur de la quatrième ouverture (152) de la partie de couplage de rondelle (112), la partie formant lèvre (1108) recouvrant la partie interne (1102) de la partie collerette (110) pour la rondelle de liaison (102) et la partie de support d'écrou (1110) s'étendant dans la première ouverture (116) de la partie collerette (110).

14. Ensemble formant élément de retenue d'écrou selon la revendication 13, dans lequel la troisième surface intérieure (136) associée à la partie de couplage d'élément de retenue (130) et la partie de retenue d'écrou (132) de l'élément de retenue d'écrou (124) est dimensionnée et formée pour s'ajuster sur l'écrou d'élément de fixation (140) entre l'élément de retenue d'écrou (124) et la rondelle de rétention (1002).

15. Ensemble formant élément de retenue d'écrou selon la revendication 8, dans lequel le capuchon non conducteur (702) est transparent pour permettre une inspection interne après que l'ensemble formant élément de retenue d'écrou soit assemblé avec un écrou d'élément de fixation (140) retenu à l'intérieur.
